# EUROPEAN PATENT APPLICATION

(11) **EP 4 292 578 A1**
(43) Date of publication of application: **20.12.2023**
(21) Application number: 23179758.0
(22) Date of filing: 16.06.2023
(51) Int. Cl.: A61J 7/00, A61J 7/04

(54) **DEVICE, SYSTEM AND METHOD FOR MANAGING AND MONITORING MEDICATION OF A PATIENT**

(30) Priority: 17.06.2022 GB 202208943; 07.09.2022 IE S20220146
(71) Applicant: HealthBeacon PLC, D12 WD85 Dublin 12 (IE)
(72) Inventor: Joyce, James, Dublin, D12WD85 (IE); Shattock, Richard, Dublin, D12WD85 (IE); Daly, Kieran, Dublin, D12WD85 (IE)
(74) Representative: Murgitroyd & Company

(57) **Abstract**

There is provided a device, a method and a system for managing and monitoring the medication of a patient. The medication storage and retrieval device (21) for managing and monitoring use of medication, the device (21) comprises a housing (122); a movable support (123) coupled to the housing; one or more containers (1) removably positionable within the housing of the device locatable on the support, each container being configured to store a medication, the medication provided in a loose form such as tablets or pills. The device (21) has a first closed configuration when the movable support (123) and containers thereon (1) are stowed within the housing, and a second open configuration when the movable support (123) and said containers (1) thereon are located outside the housing for access by a user to allow retrieval of medication from a container, as required. The device comprises an imaging device (11) configured to capture one or more images of each container and its contents, being the medication contained therein at the time of capture of the image, the time of capture of each image being related to a device use event. The imaging device (11) is configured to capture a first image of each container and contents before it is made accessible to a user, and to capture a second image of each container and contents after it has been accessible to the user. The images and other use data are processed to determine for each device use event one or more of: the identity of the type of medication contained in each container, the quantity of medication in the container before access and after access, the difference in the quantity of medication in the container before access and after access.

## Description

### Priority

This application claims priority to GB 2208943.7 of June 17, 2022 and Irish Patent application no. 2022/0146 of September 7, 2022, the contents of which are herein incorporated by reference.

### Field

The present application relates to a device, a method, and a system for managing and monitoring medication of a patient.

### Background

With medical and pharmaceutical progress, a wide variety of medicaments are available to treat an increasing number of diseases including chronic conditions. Chronic conditions may affect young and older people alike. As a result, a wider percentage of the population is subject to long-term treatment of chronic diseases. Elderly people are particularly affected by the constraints of taking multiple medicaments as on average the number of health problems increases with age. Many patients selfadminister multiple medicaments in various forms (pills, tablets, lozenges, powder...) on a regular basis. A U.S study revealed that a third of older citizens regularly use at least five prescribed medications. It is cumbersome and challenging for an individual to adhere to several medical prescriptions especially when certain medicaments must be taken regularly or at specific times. It is particularly challenging for elderly people and/or the visually impaired to manage multiple medicaments. Managing multiple drugs increases the risk of underdosing or overdosing which can further complicate the health condition of a patient. As many patients have difficulty in adhering to their specific medication as scheduled, there is a need to help them improve adherence to their individual and often complex therapy regimens.

Existing system and methods for monitoring adherence to a prescription drug regimen may often be complex to manufacture as they include a plethora of parts and a plurality of capture devices. In a pharmaceutical provider environment, systems may be provided for use by a professional to recognize dispensing errors with medication using an imaging device. These systems are complex, and their use is difficult especially for elderly people who need much assistance to adhere to their prescribed medicament regimens.

Therefore, there is a need for an improved and alternative system that for managing medication that addresses the above problems. In particular, there is a need for a system for a non-specialist user such as a patient or a point of care user at home.

### Summary

To address the above-mentioned problems, there is provided a device, a method, and a system according to the independent claims. Further optional features are set out in the dependent claims. The device according to the invention provides a solution for managing and monitoring the medication of a patient. Accordingly, the present disclosure offers an effective solution to improve adherence of patients to their long-term self-medication regimens.

The specification provides arrangements of a device, a method and system for assisting a user in managing medication. The specification also provides arrangements for monitoring compliance with a medication schedule.

According to a first aspect there is provided a medication storage and retrieval device (21) for managing and monitoring use of medication, the device (21) comprising:
a housing (130);
a movable support (123) coupled to the housing;
one or more containers (1) removably positionable within the housing of the device locatable on the support, each container being configured to store a medication, the medication provided in a loose form such as tablets or pills;
the device (21) having a first closed configuration when the movable support (123) and containers thereon (1) are stowed within the housing, and a second open configuration when the movable support (123) and said containers (1) thereon are located outside the housing for access by a user to allow retrieval of medication from a container, as required; and
the device comprising an imaging device (11) configured to capture one or more images of each container and its contents, being the medication contained therein at the time of capture of the image, the time of capture of each image being related to a device use event;
wherein the imaging device (11) is configured to capture a first image of each container and contents before it is made accessible to a user, and to capture a second image of each container and contents after it has been accessible to the user;
wherein the imaging device is configured to capture said images during the device use event at intervals of time as the movable support moves between the closed configuration and the open configuration and as it returns to the closed configuration;
wherein the images are processed to determine for each device use event one or more of: the identity of the type of medication contained in each container, the quantity of medication in the container before access and after access, the difference in the quantity of medication in the container before access and after access.

The device provides a secure means for storage of medication and further supports a user in their adherence to a medication regime by providing access to medication and for monitoring of access to the medication. The images captured at the device allow determination of key data relating to the use of the medication, including: the amount and type of medication retrieved by a user at a particular time or a particular device use event. The imaging device is configured to capture images before and after the user has access to the containers and medication. The images provide an accurate indication of the medication taken and amount taken during each device use event.

The device can also be used to control access to the medication contained therein. For example, access may be limited to specific users or allowed only at specific times.

In one embodiment, the device use event relates to a time when the device operates to allow a user access to the one or more containers and/or the medication contained therein, wherein during a device use event the movable support is moved from the closed configuration to the open configuration and subsequently returned to the closed configuration.

A device use event may occur at a scheduled time, for example a user may be scheduled to take medication at one or more times during the day. The device may be programmed to alert a user of a scheduled device use event. The device may be programmed to indicate one or more device use events each day. The device may also be set-up up to allow the user to initiate a device use event at the device. The device further provides for recordal of the time of each device use event. The device use event data and the image data may be transmitted from the device to a medication management system. A different type of device use event is when the device is used and operated to allow a refilling of the containers. In this case, the difference in the contents of a container before and after the device use event as determined by the processing and analysis of the captured image would indicate an increase in the number or quantity of medication in container which have been refilled. This data is also relevant to the management and monitoring of the medication of a user.

In one embodiment, the device is configured to provide information relating to the use of medication to the user, wherein the device comprises an information display or information indicator configured to indicate to the user one or more of: when medication is to be taken or the times of scheduled device use event; which medication is to be taken at a particular time or scheduled device use event. In one arrangement the device is coupled to device controller (50) configured to control operation of the device, including one more or more of the movable support, the imaging device, a time and user event recordal device.

In one embodiment, the device is operable coupled to an app 52 and a display of information is provided on the app mirroring the state of the device and guiding the user interaction with the device. The user may communication with the device via the app and the app may show any updates of the interaction with the device.

The device may be controlled by a device controller, which may be integrated therein or an external controller. The device may be further configured for coupling to a medication management and monitoring system. Use data including device use event and time data and image data may be transmitted or provided from the device or controller to the medication management and monitoring system.

In one embodiment, the device is configured to receive a plurality of containers, the movable support comprising a plurality of receivers each formed and configured to receive a container, wherein the receivers are arranged as an array of rows and columns of receivers.

The receivers may be integrally formed with the movable support. The receivers or the array of receiver may alternatively be provided as an insert or tray removably insertable onto the support.

In one arrangement the movable support (123) is coupled to a drive means operable to move the movable support between the closed configuration and the open configuration. In one arrangement the device controller (50) controls operation of the drive means for moving the movable support (123) and operation of the imaging device (11), wherein the controller (50) is operable in the course of a device use event to position each container at an image capture position relative to the imaging device, and wherein the controller is operable to control the imaging device to capture the image when the container is in position.

The position and movement of the movable support may be controlled and co-ordinated with operation of the imaging device by the device (11) and/or the device controller (50). The controller may further be operable to pause the movement of the movable support while the image is being captured. The device may further be arranged to have one or more sensors to sense when a container is positioned at the image capture position and to trigger image capture at that time. As described above each container is position for imaging and images are captured twice during a device use event.

In one embodiment, the movable support comprises a drawer.

In one embodiment, the imaging device (11) is located mounted in an upper part of the device housing (122) and is configured to capture images of each container and contents from above. In one arrangement the imaging device comprises an array of imaging devices such as cameras.

The containers may be also arranged in an array on the movable support. The imaging array may comprise a plurality of imaging devices or cameras arranged in a row for example across the width of the device so that an imaging device or camera is located to image a corresponding container of the container array. In a preferred arrangement, the imaging device is located near to the opening of the housing and transversely across the housing. As the movable support moves between the closed and open configuration, each container or each row of containers is in turn positioned at the imaging location. In one arrangement the array of imaging devices comprises a number of imaging devices corresponding to the number of containers or receivers in a row, or is arranged to simultaneously capture a number of images corresponding to the number of containers or receivers in a row. In an alternative arrangement, the imaging device may be arranged to capture, in a single image, details of the contents of each container in a row.

In one embodiment, the device is configured such that movable support is moveable to one or more partially open configurations, between the closed and open configuration, wherein the number of partially open configuration is set for correspondence with the number of rows of containers, wherein in each partially open configuration, a different row of the array is aligned with imaging device for allowing each capture means to capture an image of each container in the row located at the imaging device.

In one embodiment, the movable support is configured to temporarily stop at each partially open configuration as the movable support moves in and out of the housing and wherein the imaging device is operable to capture an image of each container when the moveable support is in position.

In one arrangement the movable support is configured to receive an array of containers comprising four columns and three rows so that the drawer can receive twelve containers.

In one embodiment, the device further comprises a sensor, comprising a user input sensor, for detecting a user input to control operation of the device, wherein the user input includes (i) a user moving their hand or other object relative to the sensor including for example, waving their hand at the sensor to indicate that the device is to open; and (ii) a user maintaining their hand or other object in a relative still position relative to the sensor, or holding their hand steady over the sensor, to indicate that the device is to close.

In one embodiment, the device further comprises a sensor, comprising a user input sensor, configured to detect a user input to control operation of the device, wherein the user input includes for example (i) a user waving their hand at the sensor to indicate that the device is to open from the closed position or to close from the opened position; or (ii) a user holding their hand steady over the sensor to indicate that the device is to close or that the device is to open.

Various arrangements of the array of receivers or containers are possible including for example 3*4 or 3*3 (rows*columns). The receivers may be provided as a removable insert for the housing. Therefore, it is possible to change the form of the array of receivers and containers depending on user requirements. It would also be possible to adjust the size of each receiver depending on a container size. In addition, the number of containers required will depend on the amount of medication a user needs to store and take.

In one embodiment, each container comprises an at least partially transparent portion located and configured to allow the imaging device to capture an image of the contents of the container.

In preferred arrangements at least the cover or lid of the container is configured to facilitate imaging of the contents.

In one embodiment, each container has an internal base portion defining a floor of the container formed to provide a distribution of the medication therein such that the medication is distributed across a surface area of the base.

The distribution of the contents in the container, by virtue of the form of the container, allows for improved imaging of the contents to support image processing to determine the quantity or number of tablets in the container. In addition, the side wall of the container may be configured at an angle for example to slope outwardly from the base to the top of the container.

In one embodiment, the internal base portion is arranged according to one or more of the following: wherein the internal base portion slopes from a central portion (central axis of the container) to the side wall portion of the container; wherein the internal base portion has a convex form; wherein the internal base portion comprises one or more annual steps;

In one embodiment, each container has an external base portion, wherein the external base portion comprises a coding member formed for mating with a corresponding coding member of a receiver provided within the housing for receiving a container.

Each corresponding container and receiver pair typically has corresponding coding or keying members which are configured to mate - such that a container is inserted to the correct or corresponding receiver. The coding or keying members of each container and receiver pair are different. The forms of the corresponding coding members may be varied. In one arrangement each receiver comprises a recess in the form of a number (1-9 or 1-12) or a letter (a-i or a-I) and the base of each container comprises a corresponding coding member a protrusion in the form of a number or letter receivable in the respective recess.

In one embodiment, the device comprises a sensor, comprising a container sensor, associated with at least one container and communicatively coupled with the controller; wherein when the sensor senses that the at least one container is received at or removed from the receiver corresponding to that container, the sensor sends a detection signal to the controller. The device may comprise a plurality of container sensors, to provide sensing for each container.

In one embodiment, the information indicator comprises a light indicator configured to illuminate to identify one or more containers to be used during a device use event. The device may comprise a plurality of light indicator, to provide illumination at each container to allow identification of each container.

The information indicator is provided in the device to guide the user or patient as they access the containers and medication stored in the device. A medication schedule for the patient may be stored in the device or controller or on another remotely connected system. The schedule will indicate a time that a medication is to be taken, the type of medication and the amount. The device is configured to receive information relating to a device use event, the information includes: the time of device use event, which medication is to be taken, and the amount. The device is configured to provide this information to a user. A user may be alerted by the device or other connected system that they are to take medication. When the device is opened the light indicator illuminates one or more container to indicate that these particular containers are to be accessed and the medication contained therein is due to be taken. The light indicator may flash at intervals to indicate an amount to be taken for example - flash twice in series to indicate 2 tablets. When the container is removed and subsequently returned to the receiver the light indicator is switched off.

In one embodiment, the light indicator comprises a plurality of LEDs, each LED being associated with a respective container, wherein each LED illuminates to indicate that its associated container is to be removed from the device.

In one embodiment, the device is configured such that the moveable support is prevented from returning from the open configuration to the closed configured when a sensor senses that the at least one container is not correctly positioned or has not been returned to the movable support.

In one embodiment, wherein each container has a different colour, and the imaging device is configured capture an image including details of the colour of a container and the contents thereof.

The use of containers of different colour may assist a user in identifying and distinguishing the container from others. Further, this additional identification information may be captured by the imaging device. In an alternative arrangement, instead of providing containers having different colours, each container may be illuminated with a different colour.

In one embodiment, each container has a different label, and the imaging device is configured to capture an image including the label of the container and contents thereof

Labels are provided to assist and user in identifying and distinguishing the container from others. for associating a container and its contents with the respective label. Further, this additional identification information may be captured by the imaging device.

In one embodiment, the medication container (1') comprises a container body (1010) and a lid (1030) moveable about a hinge (1050) relative to the container body, and wherein the container is configured to have three states of use, including a first closed state (1001) at which the lid is engaged with the body of the container, a second medication retrieval state (1003) at which the lid is movable relative to the container to define an opening (O1) for controlled retrieval of a tablet or pill, and a third release state (1002), in the released state the lid is movable freely relative to the opening (1031).

In one embodiment, in the released state (1002) all portions of the lid (1030) can be moved so as to be spaced apart from the container body (1010) to allow access to the internal portion of the container.

In one embodiment, lid (1030) comprises an inner depending side wall (1036) configured such that when the lid is moved to the retrieval state, the depending side wall define an opening (O1) between the lid and the container at one side only of the container (1').

In one embodiment, the inner depending side wall (1036) extends between the lid and container body at both side of the opening (O1) to prevent medication from exiting the container other than at the opening (O1), to facilitate ease of retrieval of medication by a user and to prevent spills.

In one embodiment, the container comprises a locking mechanism (1040).

In one embodiment, each device (221) is configured for arrangement in a stacked configuration with a second device (221), wherein the actuator and/or sensor is located in proximity to a side wall of the device such that it is accessible in the event that the device is arranged in a stacking configuration, and wherein each device comprises corresponding upper and lower mating features to support arrangement in the stack configuration.

In one embodiment, a lower surface (231) of each device comprises a plurality of contact feet (260) for engagement with an upper surface of a corresponding device (221) for arrangement in the stacked configuration.

In one embodiment, an upper surface (232) of each device comprises a recessed portion (240), wherein the contact feet (260) of another device are locatable in the recess.

In one arrangement, a lower surface (231) of each device comprises a recess portion (250), wherein the contact feet (260) are located in the recess portion.

In one embodiment, the recessed portions (240, 250) of each of the upper surface and lower surface of the device (221) are located spaced apart from an outer peripheral edge of each of the respective upper surface and lower surface of the device.

In one embodiment, each recess (240, 250) comprising a peripheral edge wall (242, 252) wherein the peripheral edge walls of each recess are configured for mating and engagement with each other when a first lowermost device is stacked together with a second uppermost device to provide a stable and secure stacked configuration.

According to a further aspect, there is provided a medication container (1', 1) comprising a container body (1010) and a lid (1030) moveable about a hinge (1050) relative to the container body, and wherein the container is configured to have three states of use, including a first closed state (1001) at which the lid is engaged with the body of the container, a second medication retrieval state (1003) at which the lid is movable relative to the container to define an opening (O1) for controlled retrieval of a tablet or pill, and a third release state (1002), in the released state the lid is movable freely relative to the opening (1031).

In one embodiment, in the released state (1002) all portions of the lid (1030) can be moved so as to be spaced apart from the container body (1010) to allow access to the internal portion of the container.

In one embodiment, in the released state (1002) all portions of the lid (1030) can be moved so as to be spaced apart from the container body (1010) to allow access to the internal portion of the container.

In one embodiment, the lid (1030) comprises an inner depending side wall (1036) configured such that when the lid is moved to the retrieval state, the depending side wall define an opening (O1) between the lid and the container at one side only of the container (1').

In one embodiment, the inner depending side wall (1036) extends between the lid and container body at both side of the opening (O1) to prevent medication from exiting the container other than at the opening (O1), to facilitate ease of retrieval of medication by a user and to prevent spills.

In one embodiment, the device has a top cover defining a lid, that is movable relative to the housing between an open position and a closed position, wherein in the first closed configuration of the device, the top cover is closed and in the second open configuration of the device, the top cover is opened to allow user access to the interior of the housing.

In one embodiment, the imaging device is located coupled to an internal surface of the top cover and wherein the operation of the imaging device to capture an image, is linked to the position of the top cover.

In one embodiment, a scale is provided located on the one or more containers or the corresponding one or more receiver, the scale comprising a series or lines or mark or a ruler for use in measuring an amount or quantity of a medicament in a container, wherein the imaging device is configured to capture an image of the scale together with the contents of the container.

A scale may be provided in the form a plurality of circumferential lines around the interior or exterior wall of the container, or an interior wall of the receiver. The scale may comprise a ruler or other marking. When included in the before and after use images of a container and contents the scale data may assist in the determination of an amount or quantity of the medication in the container at the time the images were captured.

According to a further aspect there is provided a method of managing and monitoring the medication of a patient using a device as claimed in any of the preceding claims, wherein one or more containers are provided within a housing of the device, each container being configured to store a medication, the medication provided in a loose form such as tablets or pills;
capturing with the imaging device image data, including images of the at least one container and its contents, at different times during a device use event, in particular for each device use event a first image of a container and its contents is captured before the container is accessible to a user, and a second image of a container and its contents is captured after the container has been accessible to the user;
transmitting the captured first and second images of each container to a controller or system comprising an image processor;
processing the images of each container to determine to determine for the device use event one or more of the following: the identity of the type of medication contained in each container, the quantity of medication in the container before access and after access, the difference in the quantity of medication in the container before access and after access

In one embodiment, the method further comprises processing the image data to identify a position of the one or more containers within the device at the times when the images are capture; and
verifying that said position of the container within the device corresponds to a pre-defined position for that container and medication.

In one embodiment, the method comprises based on the images captured at the different times, determining by the controller the different times at which the at least one container receives or dispenses a medicament; and
determining the quantity of medicament received or dispensed at the different times in the at least one container.

In one embodiment, wherein based on the quantity of medicament dispensed to or refilled into a container at the different times or during one or more device use events, assessing by the controller or system compliance with a prescription schedule.

In one embodiment, based on the association between the at least one container and its respective contents, label and/or colour and based on the position of the at least one container in the device, the method further comprises verifying by the controller that an arrangement of the medicaments in the device corresponds to a predefined arrangement.

The method may further comprise providing a notification when the quantity of medicament dispensed or refilled at the different times is non-compliant with the prescription schedule.

The method may further comprise sending by the controller or system to a user display or device a notification including an instruction to refill the at least one container when the quantity of medicament in the at least one container falls below a pre-determined threshold.

The method may further comprise sending by the controller or system a notification to alert that am arrangement of the medication in the device does not correspond to the predefined arrangement.

According to a further aspect there is provided system comprising a device according to an arrangement of the specification, the system further comprising:
a controller associated with the device;
a medication management and monitoring system comprising a computer hardware and software system communicatively coupled with the controller;
the controller configured to control operation of the device including one or more of: to display information to the user; to control an information indicator comprising one or more LEDs to cause the LEDs to illuminate to guide a user; to control movement of the movable support; to control operation the imaging device; control storage and communication of image captured by the imaging device; to control opening and closing of the device; to control access to the medication stored in the device.

In one embodiment, the controller is integrated into the device or remotely from the device.

In one embodiment, the controller is configured to control the transmission of use data including: time, and image data captured by the imaging device during one or more device use events to the medication management and monitoring system.

### Brief Description of the Drawings

FIG. 1. 1 and 1.2 shows a system according to an exemplary arrangement of the specification;
FIG. 2.1 and 2.2 show perspective views of an exemplary device according to an exemplary arrangement of the specification; FIG. 2.3 shows a top view of the device;
FIG. 2.4 and FIG. 2.5 show a front view and a side view of an exemplary device according to an exemplary arrangement of the present disclosure;
FIGs 3.1 to 3.5 show perspective views, a side view and a top view of a container according to an exemplary arrangement of the specification;
FIG. 4.1 and FIG. 4.2 are top views of an exemplary device according to an exemplary arrangement of the specification;
FIGs 5.1 to 5.4 are cross section views of an exemplary device according to an exemplary arrangement of the specification;
FIG. 6 shows a perspective view of an exemplary device according to an exemplary arrangement of the specification;
FIG. 7 shows a perspective view of an exemplary device according to an exemplary arrangement of the specification;
FIG. 8 illustrates an exemplary layout of containers within a device according to an exemplary arrangement of the Specification;
FIG. 9.1 illustrates an exemplary device of the specification in a closed configuration, FIG. 9.2 show the device in an intermediary open configuration and FIG. 9.3 shows the device in open configuration;
FIG. 10 illustrates various configurations of a device according to an exemplary arrangement of the specification at five different times as it is operated through a range of movement;
FIG. 11 illustrates steps of a method of managing and monitoring medication of a patient according to an exemplary arrangement of the present disclosure;
Figure 12.1 provides a perspective view an alternative device according to an exemplary arrangement of the specification, Figure 12.2 provides a perspective view of the drawer and an array for receiving container of medication of the device 12.11; Figure 12.3 provides a perspective view of the device of Figure 12.1 with containers in location therein;
Figures 13.1 to 13.4 include a plan view from below, plan views from the front and side and a perspective view of the device of Figures 12; the drawings show recesses provided on the upper and lower surfaces to support stacking;

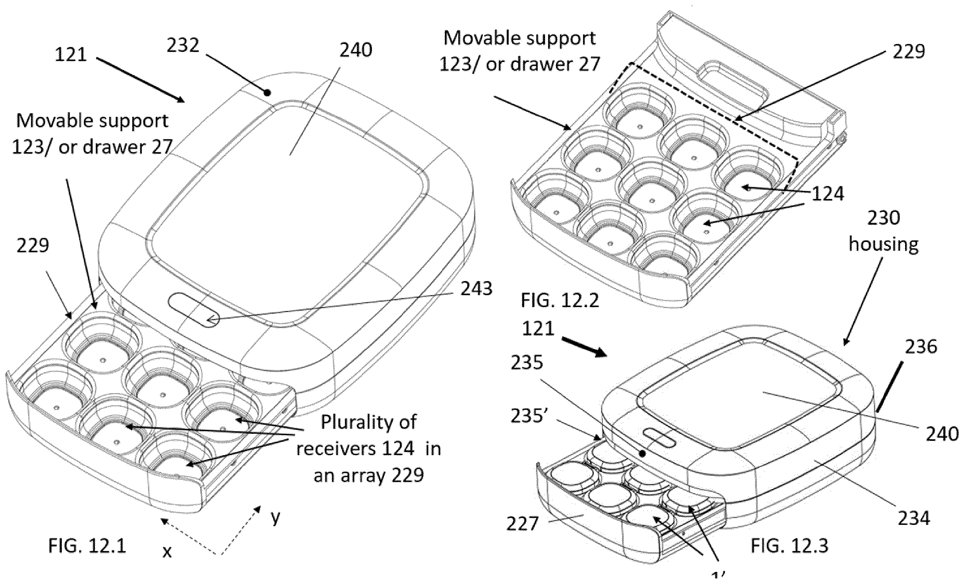

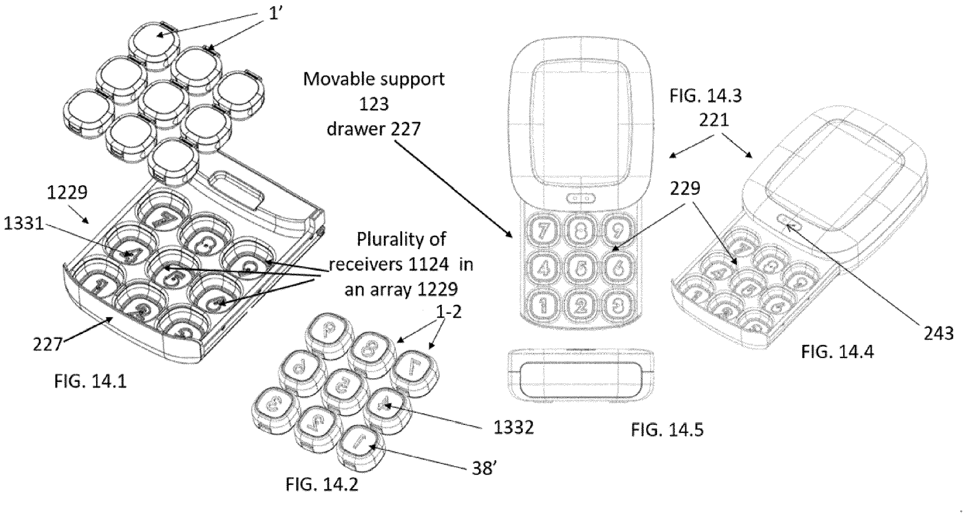

Figures 14.1 to 14.4 show view of a set of corresponding medication container and a drawer or insert for receiving the containers; figure 14.1 provides a perspective view of the container and array showing keying features in the base of the receivers of the array; Figure 14.2 is a perspective view of the lower base portions of a corresponding set of container; Figures 14.3 and 14.4 include a top plan view and perspective of a device according to Figures 12 with the movable support open and showing an array with keying components; Figure 14.5 is a plan view from the front of the device of Figures 14.3 and 14.4;
Figures 15.1 to 15.4 include a perspective view, top plan view and front and side plan views of the device of Figures 2 showing an alternative arrangement of the drawer and array, the array including keying features, a set of containers having keying features corresponding to those of the receivers of the array is also shown; and
Figures 16.1 to 16.6 show an alternative medication container or pod according to an exemplary arrangement of the specification, including a perspective view of the pod in a released states with the lid open; plan view from the side, front and below with the lid closed; and a perspective view with the lid closed and in Figure 16.6 a perspective view with the lid in a medication retrieval configuration.

The accompanying drawings may be better understood by reference to the following detailed description.

### Detailed Description

The system and method described herein involve interconnected networks of hardware devices configured to receive data using receivers, transmit data using transmitters, and transform electronic data signals. The inventive subject matter is considered to include all possible combinations of the disclosed elements.

A number of terms used in describing various examples of the present disclosure may be used synonymously and interchangeably. For example, the term "medicament" may be used synonymously with "medicine", "medication", or "drug". The term "patient" may be used synonymously with "user". The term "carer" is used to refer to a Healthcare professional. Containers are also referred to as pods. Imaging device may also be referred to as capture means.

The system, device and method of the specification are directed to assist patients in monitoring their medical adherence behaviour and to manage their medications. Advantageously the system can help patients to improve adherence to their medication schedule. The system comprises at least one medicament container which is configured to receive medicaments, medicaments are deposited therein and/or to dispense medicaments. The device according to arrangements of the specification may be provided as a table top or counter top device for use by a patient in the home. The device provides a compact storage unit that is configured with additional features and functionality to both assist and guide the user in the use of medication and to provide a monitoring of that use, to assist in the management of the medication and in adherence to the medication regime of the user. Users will often have a complex therapy regimen that requires that specific tablets are taken at specific time or in specific combination. The device and system support the user with these requirements.

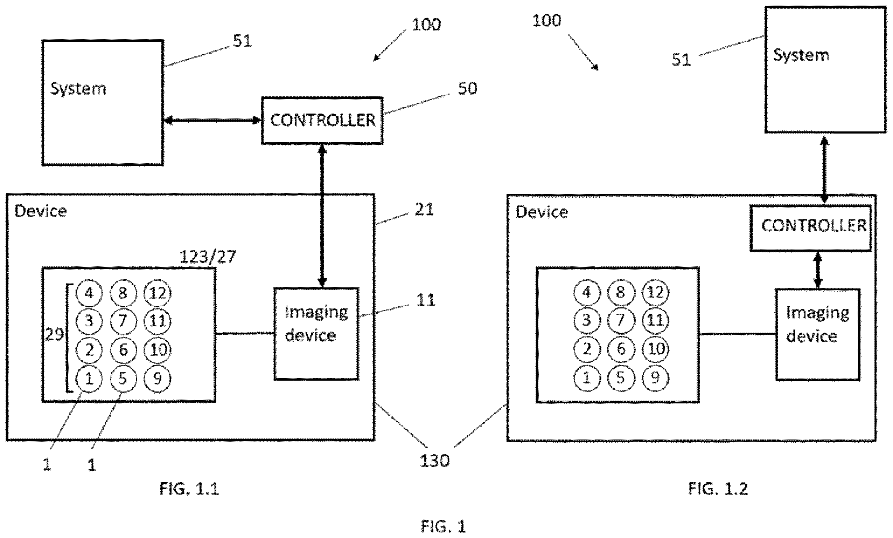

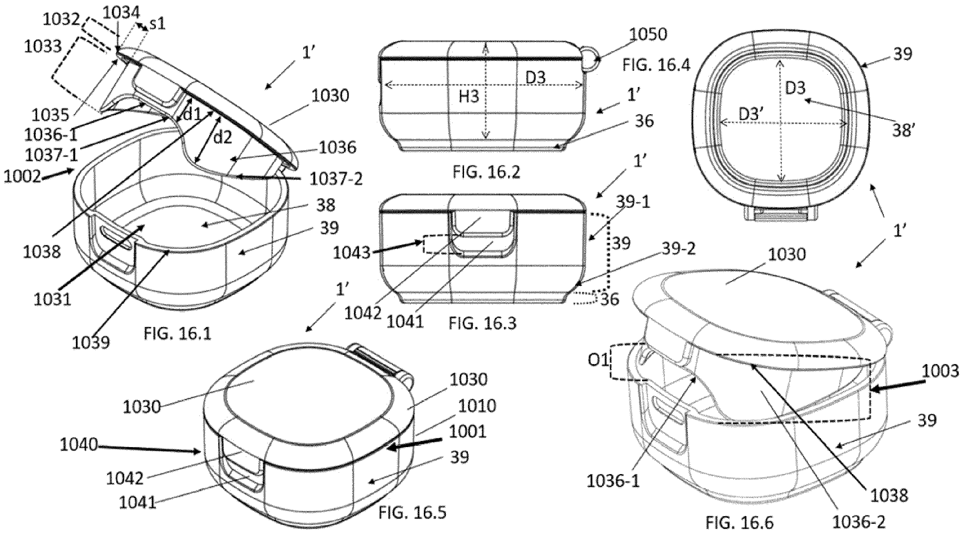

Referring to FIG. 1, there is provided a system 100 for tracking and managing the medication of a patient. The system 100 comprises a device 21 comprising an imaging device 11, also referred to in the specification as an image capture means 11. The housing 130 comprises a base 131, top 132, and side walls 133, 134, a front-end wall 135, and a back-end wall 136, which define an interior space for receiving and storing a medication. The housing has a generally cuboid form.

The front-end wall 135 comprises an opening 135'. The device 21 further comprises a movable support 123 coupled to the housing. The device includes one or more medication containers 1 positionable within a housing 130 of the device. The one or more containers 1 are removably positionable within the housing 130 of the device locatable on the support 123, each container 1 being configured to store a medication, the medication typically provided in a loose form such as tablet or pill form. Typically, a patient would introduce his/ her various medications into one or more containers 1 and store the containers in the device 21. A container 1 may be subdivided into a plurality of compartments, a compartment may be provided to allow storage of medication to be used or taken at different times such as AM/PM or morning/afternoon/evening. An insert may be placed within a container 1 to create this subdivision. Alternatively, a set of pre-subdivided containers can be provided.

Advantageously, the device 21 allows a user to keep all medicaments in one place simplifying storage and management of multiple medicaments. The device further advantageously allows for a control of access, display of information to guide a user in their use of the device and medication and allows for a record of medication loaded into a container and used or taken from a container at a particular time of use of the device. A device controller (50) is provided associated with the device 21 and for controlling the device. A medication and use management system 51 based on a hardware and software system including a controller, data storage, communication means, processor, and an image processor is also provided. The system 51 is configured to communicate with one or more of: the device controller 50, the device and a connected computing or mobile device of a user. The device controller 50 is communicatively coupled with the imaging 11 to receive, store and transmit images captured within the device 21. The device 21 may further include an information display 140 and/or an information indicator 141.

An application 52 also referred to as app 52 may be provided downloadable and installable to a user device. The application may be associated with the system 51 The application 52 is configured to provide interactive system that is operable to interact with the user to provide information to the user and to gather information or feedback from the user. The application is operable including to allow a user sign up and register, to provide instructions or guidance about when to take a particular medication or how to fill the containers, to support filling of containers, setting up a medication schedule for the user.

In one exemplary arrangement according to the specification, the application 52 is configured with a My Progress function, that indicates how a patient is performing with regard to their medication schedule or plan, which shows an "on-time" or adherence score. My progress is also configured to show a summary of what medication needs to be taken today. The application 52 is configured to provide an "Add Medication" and "Add Device". The add medication feature supports the user as they load medication into the medication containers. The user may pre-select a medication type from a dropdown menu, add the strength of the medication, and also the frequency of administration. The requirements for administering the medication are accordingly noted within the app when the medication is loaded into a particular medication container. The app 52 provides as further approach for adding details of a medication that it is possible scan a medication barcode during and to facilitate filling.

Therefore the details of a medication can be incorporated into the system by scanning for example a QR code. The user may dispense the medication from the medication packaging into the relevant POD or medication container of the device. The device is configured to take one or more photographs of the medication as loaded into a container - after it is filled - as a further verification of the type of medication filled into that particular container.

The application indicates to the user that they should "wave your hand" over the device to open the drawer. The application indicates which POD or pill container to select and deposit the medication. A check system is also configured to confirm the medication selection. The application will display a POD configuration and arrangement mirroring that of arrangements of the PODs within the device and accordingly guides the user through a medication filling procedure. When all required medication PODs have been filled the application prompts the user to wave their hand over the device to close the drawer. The application 52 is configured to provide a refill function. In this configuration the PODs can be refilled with medication based on previous filling events.

An "add device" option would allow one or more devices (21) be controlled by the one application. It can also be configured to allow the addition of other smart devices to help the user, patient or caregiver manage their devices, medications or treatments more effectively.

The app 52 further provides an option to the user to edit their previous entry for a medication. This might be used for example if a user needed to change the quantity of medication to be taken, in the event that there was a change in the strength of the medication being loaded into the system, or a change of drug type. In addition, the app 52 is configured to allow a user to remove a medication from their system and scheduling.

The system 51 is further configured to prompt a patient at appropriate times about their prescription schedule such as to provide reminders. In the medication schedule configuration, the user can set the appropriate time and frequency of these reminders appropriate for the type of medication. The application 52 may be communicatively coupled to the system 51.

When it's time to take a medication the system is configured to send a reminder through the application 52 prompting the user that it's time to use the device and to open the device for example by waving or moving their hand over the device. The application 52 is configured to display a POD layout which mirrors the layout of PODs, each containing a medication, within the device, and indicates through different shading or colours or other highlight option which PODs to remove at this particular time of use of the device in accordance with the medication schedule of the patient. The arrangement within the device mirrors the display and further the device provides for selectively illumination of the one or more appropriate LEDs for the relevant PODs indicating which ones to select and to access at this time. As the PODs are removed and returned to the device (following removal of the medication) the application 52 updates with the user interactions at the physical device to reflect the removal and return of each POD in parallel with a colour change of the LED illuminating each POD. Once all of the medication has been taken and the POD's returned the application is configured to prompt the user that it's time to close the device for example by waving or moving their hand over the device and to interactively acknowledge that the medication has been successfully and correctly administered for example by displaying a positive feedback reward icon and text such as a "well done" smiley face or emoji following completion of the event. The home page or My progress page of the app 52 updates with a real-time -time adherence score.

The application 52 is configured to indicate if PODs are missing and need to be replaced.

The system through the application 52 can signal when medication levels in one or more medication containers or PODs are getting low and when a refill is needed.

Over time, the system learns through AI and machine learning in relation to the different medication types, frequency and user habits. Accordingly, the system effectively provides a smart system that is configured to actively manage patients medication administration more efficiently by providing an interactive medication use support system including for example - sending smart text reminders, at appropriate times and in line with previous patient administration habits. The system can also identify variations in use, for example possible missed events are flagged or alerted via the smart system.

Similarly, the counting of pills by the device at each use event through the device image capture system is reflected within the app 52 which may be configured to display the medication count of one or more medication containers or PODs in real time or near real in the application.

As noted above, the device may include a child lock. The child lock may be operable via the app 52 or controllable by the user at the app 52. In an exemplary arrangement, the device may be configurable to allow access to the medication containers only scheduled times or for loading. In an exemplary arrangement, the child lock is provided as an additional access control feature, in addition to the sensor that is configured to detect user interaction at the device, to open and close the device. It will be appreciated that an alternative child lock arrangement may also be provided.

To help manage their medication, the patient or the user of the device (21) would typically receive reminders on their mobile phone and/or on an information display and/or an information indicator of the device 21 or via the application 52. The notification received on a mobile phone or on the device (21) may be snoozed as appropriate. The user application 52 or the information display or indicator are configured to indicate: when medication is to be taken or the times of scheduled device use event; which medication is to be taken at a particular time or scheduled device use event; which container contains the medication; which container or pod the patient is to use to take his/her medication. The information display may for example include a display of the containers of the device and indicate which are to be used. The information indicator of the device 21 include light indicators such as LEDs located proximate to the or each container 1 arranged to illuminate, for example by flashing, to indicate which containers are to be used. After use, the container is closed and returned to the device. When the container is returned to its position in the device (21), the light indicator turns off or stops flashing, or the colour may change from red to green.

In use, the patient activates the device 21 and opens it. The containers 1 etc are seated on the movable support 123. In the arrangement shown the movable support comprises a drawer 27. The movable support 123 or drawer 27 is configured move in and out of the housing 130 via the front opening 133. The device is configured to receive a plurality of containers, the movable support 123 comprising a plurality of receivers 124 each formed and configured to receive a container 1, the receivers are arranged as an array of rows and columns of receivers. The receivers 124 may be provided in an insert or tray. The user activates the device (for example by waving their hand near or over a sensor) which initiates the drawer extension, as the drawer moves out, a series of images are captured. The user accesses the movable support 123 or drawer 27 to access the medicaments. The medicament PODs that need to be accessed will be illuminated or Information displayed or indicated on the device 21 or related application 52 provides the user with instructions or guidance regarding which container 1 to use and the specific amount of medication to be taken from each selected container at a particular time. The user is then guided as they follow the instructions displayed including to pick up or select a particular container and to open it and take out the specified amount of the medication. The user repeats the same steps for any additional containers indicated for use via the user application and/or the light indicators. Once all of the medication has been removed and taken in accordance with the medication schedule and the containers replaced correctly, the user may close the device (for example by waving their hand near or over the sensor) to cause the drawer to close. As the drawer closes an "after" image is taken of each container. The device 21 is configured to sense and record a quantity of medicament taken out of a container - namely the amount of medication taken by a user at a particular user interaction with the device. The device 21 and/or the user application 52 informs the patient/user that the is the required medication has been taken and that the medication delivery event is over. The device 21 or system 51 logs that the patient/user has taken the required medication via a user interaction with the application or the device.

Referring to FIG. 1.1 the device controller 50 is located remotely from the device (21). In this scenario, the device controller 50 is communicatively coupled with the imaging device 11 by any suitable communication means. FIG. 1.2 illustrates an alternative arrangement in which the controller 50 is integrated into the device 21.

As shown, the device (21) has a first closed configuration and a second open configuration. When it is opened in the open configuration, the containers 1 are accessible by a user for retrieval of the medicaments and/or loading the medicaments. When the device (21) is closed, the containers and medicaments are enclosed within the housing such that they are inaccessible by a user.

The patient might typically open the device to access the individual medicament containers 1 or to load or reload the containers with medicaments. The device 21 may have a Load mode and a Use mode to facilitate these different functions. A Power Failure feature may be provided that would allow patients to access their pills even in the event of loss of power to the device. In an exemplary arrangement, a separate manual switch to unlock the drive unit may be provided on the device. This switch is provided to allow the user access the medication therein in the event of a power failure or similar or a situation where a user needs to access their medication in an urgent or emergency situation.

Advantageously, the imaging device (11) captures an image of the containers and their contents (i.e. the medication) at different times when the device 21 opens and before it returned to the closed configuration. The images *I* can be timestamped with the processor clock time for example. The imaging device 11 will typically capture a set of multiple images from each user open/use/close event also referred to as a device use event. The device controller (50) may be configured to receives, store and transmit the images captured by the imaging device 11. The image processing may be done locally or on a separate connected image processing system. The image processing includes for instance processing to allow determination from the before and after use/access images of a container and contents at least a quantity of the medicament in each container at the different times. The device controller 50 or image processing system is configured to provide to the medication and use management system 51 monitoring and use information based on the processed images. The information may include one or more of: device use event, time, and image information. The quantity Q of the medicament in each container at the various times of interest, for example before and after each use event, of a series of use event in a day or time period is recorded in system 51.

The medication and use management system 51 of the present disclosure allows managing and monitoring the medication of the patient via the device control system 50 and related or connected devices. It significantly improves adherence of individuals with their own therapy regimens. The system 100 according to the disclosure is simple and it is suitable for use by most patients at home.

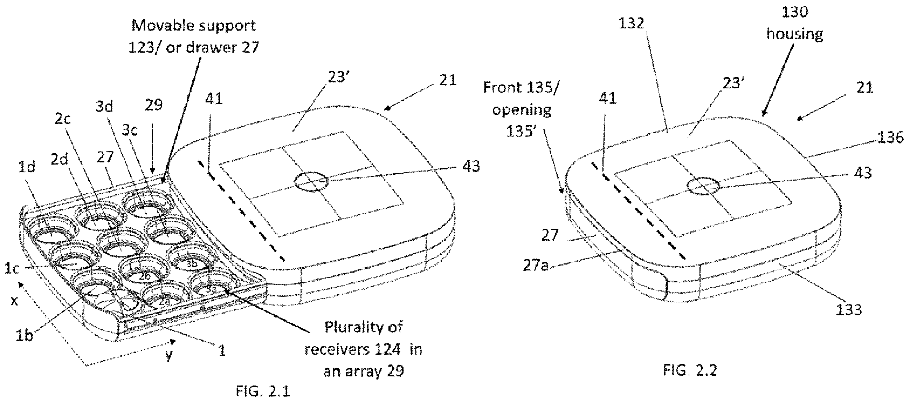

Referring to FIG. 2.1 and FIG 2.2 an exemplary device (21) having one movable support 123 or drawer 27. The movable support or drawer comprises a plurality of receivers 124 each formed and configured to receive a container, wherein the receivers are arranged as an array of rows and columns of receivers. The receivers comprise recesses (2a, 3a, 1d, etc.) into which the containers are to be received. The recesses may be formed in a tray or insert or holder. This device 21 is configured such that the support 123 or drawer 27 can receive an array 29 of twelve containers to store for instance twelve medication types. The base of the drawer is configured such that the containers can be arranged into four columns and three rows. It will be appreciated that while the arrangement shown in the drawings includes 12 recesses or holders for containers - a different number may be provided. Similarly, it will be appreciated that the form of the receivers, recesses and holders may be varied as required.

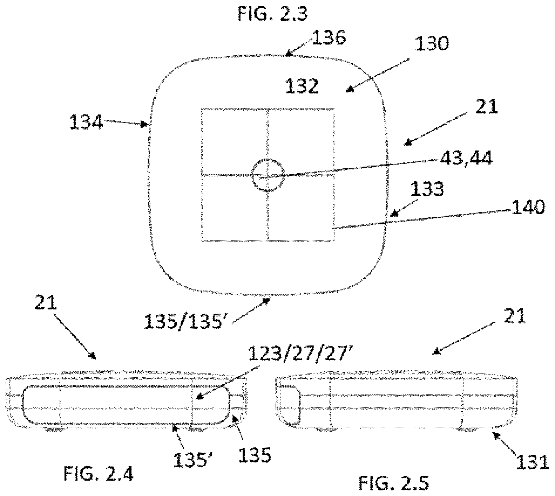

FIGs 2.3, 2.4 and 2.5 show an example device according to the present disclosure. The device 21 has a height of the order of 85 millimetres, a length of the order of 340 millimetres and a width of the order of 340 millimetres. The device 21 as shown has a substantially cuboid form with rounded corners. FIGs 2.3. The dimensions of the device are selected taking account of constraints including for manual handling and transport of the device and to provide an adequate accommodation for typical amount of medication and taking into account the home environment and space and ergonomic issues. It is appreciated that device could be provided with alterative dimensions or forms and shapes.

In the second open configuration shown in FIG. 2.1, the drawer 27 is fully extended so that each container in the drawer 27 is accessible to a user for retrieval of the medicament and/or loading the medicament. In the first closed (normal or at rest position) configuration of FIG. 2.2, the drawer is fully retracted so that each container is enclosed within the housing of the device (21). Referring to the first closed configuration of FIG. 2.2, a front face 27' of the drawer 27 is complementary to the front wall 135 of the housing 130 of the device 21 and rests flush with the front wall 135 when the drawer is closed. The device 21 comprises an opening means or actuator 43 on the top surface (23') /the top 132 of the device. The opening means may be a button or sensor which when activated cause the opening of the device and movement of the movable support and drawer in a device use event. The opening means 43 may include a proximity sensor to trigger the opening of the drawer without contacting the device 21. While in the example shown the opening means is located on the top of the device - it is appreciated that they be located at other parts of the device. An access controller 44 may be implemented to ensure that the proximity sensor triggers the opening of the drawer in response to the detection of an authenticated/authorised user. For example, the use of an RFID or NFC enabled mobile phone brought into close proximity of the device could enable the device to open and prevent access by unauthorised persons. The user application 52 may be configured to provide such access to particular user only, whereby during set-up with the mobile phone user application the user's phone is authenticated and provides a unique access key which the device recognises as it is brought into close proximity triggering the opening procedure or release of the device 21. The device may also be configured with a child lock arrangement operable both in the normal controlled mode of operation and the manual mode (used for example in the event of a power failure). Likewise a manual release mechanism could be incorporated that would allow access to the drawer in the event of a power failure or malfunction but prevent unnecessary access by a child.

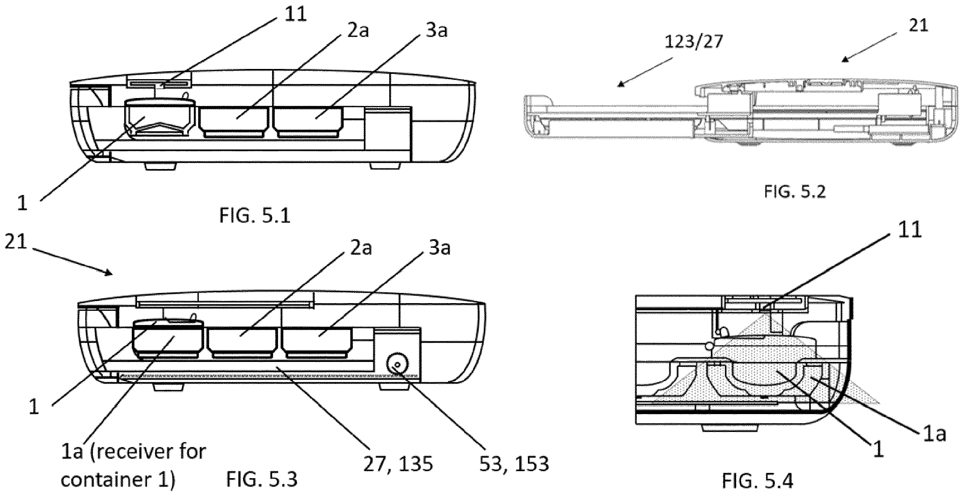

FIG 2.1 and FIG. 5.3 exemplary illustrate a container (1) seated at its receiver or recess location 1a in the first row, which is the row nearest the front face of the drawer 27. The rows of containers 1 are arranged parallel to the x axis whereas the columns are parallel to the y axis (FIG. 2.1). The container (1) is in the form of a circular or substantially oval pod that has at least one opening to receive medicaments. The terms pod has also been used in the specification to refer to the containers.

The device 21 may comprise an information indicator based on lights that illuminates to identify one or more containers to be removed from the device (21). The light indicator may comprise a plurality of LEDs, each LED being associated with a respective container, wherein each light indicator illuminates to indicate that its associated container being a container that is to be removed from the device at the particular time that the user is accessing the device. When the patient engages with the device (21) and the drawer (27) is in the fully open position (second open configuration) the containers including the medication that is to be taken will be illuminated. The patient would typically remove the indicated container, open it, take a pill and then replace the container into its home location. The indicator light would then turn off at this container. The user would then be prompted to remove the next illuminated container and replace it repeating the previous steps for each illuminated container.

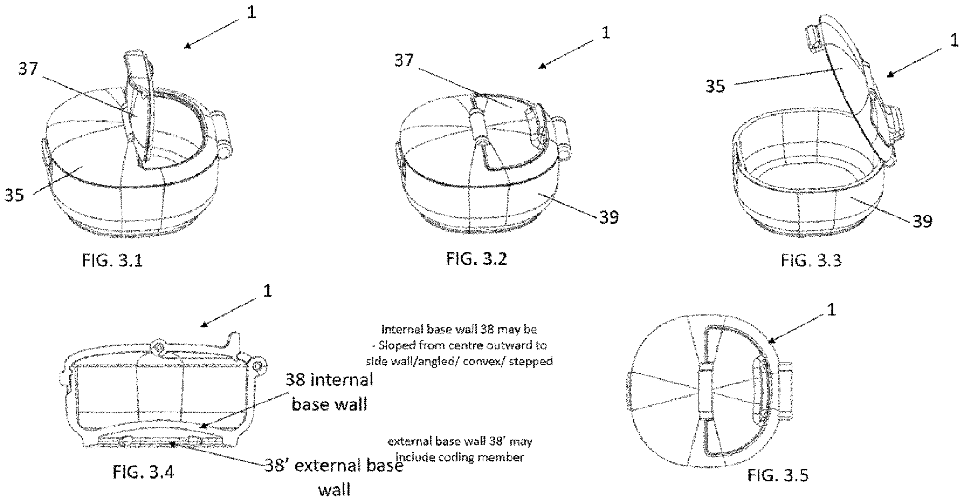

FIGs. 3.1 - 3.5 show several views of an exemplary pod 1 as an example of a container 1 according to the specification, including in an open configuration and in a closed configuration. Pod 1 has two openings defined by hinged lids 35 and 37. The first lid 35 of the pod 1 is hinged to side wall 39 of the pod 1 so that the first lid 35 opens to facilitate access to the entire interior surface of the pod. The second lid 37 is smaller than the first lid 35 and is formed as an integral part of the first lid 35. The second lid 37 is hinged to a central portion of the first lid 35 to facilitate insertion of a medicament. Compared to the second lid 37, the first lid 35 having a larger surface further facilitates removal of a medicament and cleaning the pod for instance. To improve safety, the pods may be provided with a locking mechanism such as a child-lock system.

Each pod 1 is at least partially transparent. The material and body of the pods is selected taking account also of the optical properties and to facilitate or to improve image capture of the medicaments inside the pod, and further to improve the quality or properties of the images *I* to allow counting and/or identification of the contents. In some implementations only the lids (35, 37) are transparent. The pod 1 of FIGs. 3 may for example have a diameter of the order of 60 millimetres and a suitable height for the device 21. The dimensions and form of the pod 1 are such that the medicaments especially pills can spread at the base of the pod 1 to facilitate counting based on an image capture. In the example arrangement of Figure 3.4 an internal base surface 38 of the pod on which the pills rest is arranged to include an angled and/or stepped portion. Pills distributed along a slanted surface may be easier to count. In an implementation the pod may also have a staggered bottom surface like a staircase to facilitate the stacking of pills. The internal base surface 38 of the pod may further be patterned or roughened, incorporate raised or recessed features to spread the pills or to provide increased friction between the pills and surface to facilitate counting them. A graduation such as a scale may be provided on an internal wall of the containers (pods) to facilitate determination of the quantity and counting of the pills. The scale may be arranged to extend partially or circumferentially around the interior to indicate levels within the container. Pod 1 may be provided with one or more markings to help the user identify the pod. For instance, a numeral may be embossed on the lid or a wall of the pod so that the patient can easily see the container number. Each container has an external base portion 38', and the external base portion may include a coding member formed for mating with a corresponding coding member of a receiver provided within the housing for receiving a container.

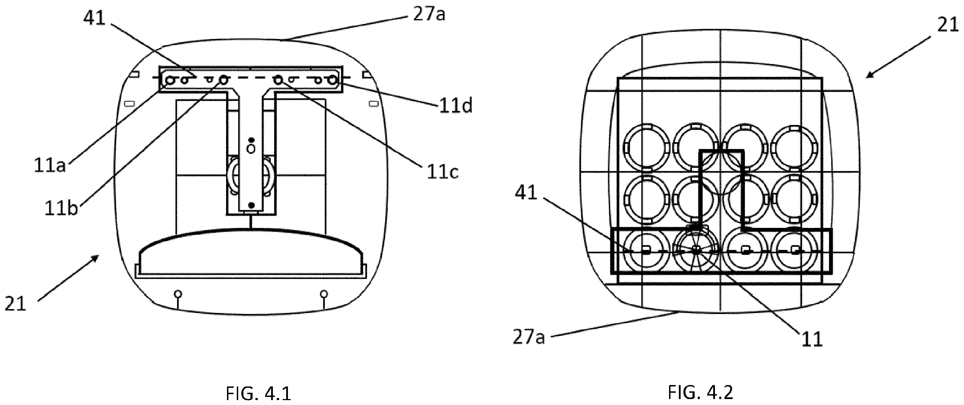

Containers 1 in the device (21) of Figures 2 can only be accessed when the moveable support or the drawer 27 is moved to a position external to the housing. In this arrangement no top lid is provided. Referring to FIGs 2-5, the imaging device 11 is located inside the housing 130 preferably at a location proximate to the upper internal surface or ceiling of the device 21. The exemplary device of FIGs 2, 4, 5 an imaging device 41, which may be similar to device 11, located in an upper part of the device (e.g the ceiling) opposite the base of the device (21). The imaging device 41 may for example comprise a plurality of cameras or other imaging devices arrangement in a row. The imaging device 41 may also comprise an elongated imaging device that extends across the row of container. The imaging device is configured such that in use a camera/imaging device is provided located to capture images of each of the containers and their contents. The dotted line (41) in FIGs 2.1 and FIG 2.2 indicates the position of the row of imaging device which are located beneath the top surface (23') of the device (21). The top views of FIGs 4.1 and 4.2 illustrate from above the device, the position (41) of the row of capture means. The imaging device 41 located proximal or adjacent the front face 135 of the device (21) through which the drawer (27) moves and out of the device (21).

Referring to the top views of FIG. 4.1 and FIG. 4.2, the device (21) comprises a number of imaging devices 11 corresponding to the number of columns of containers. As shown in FIGs 4.1 and 4.2, the device 21 has four imaging devices 11 and the drawer can receive four columns of pods 1. Referring to FIGs 2, 4, 5 the device 21 has three rows so that when the drawer (27) has received a pod 1 in each of the pod seat or receiver 1a-3d etc, the device (21) being loaded with twelve pods (1). Each row of pods 1 is configured to be moved into alignment with the imaging device 11 arranged transverse across the housing, as it moves in or out of the device (21). Hence each container in turn is located to directly face a respective imaging device.

Referring to FIGs 5 imaging device 11 (comprising a row of imaging devices/cameras) is located on the upper part of the device FIG. 5.1 pod 1 of the first row of containers is shown located directly facing the imaging device and located in the field of view. FIG. 5.3 shows a driver 53, being a component of a drive means 153 for moving the drawer 27 or movable support 123 in and out of the device 21. The drawer 27 may be operated by any suitable driving means such as a motor. Such driving means 153 is typically powered by a battery internal to the device and/or an electric power supply. The drawer or support may also be configured to allow manual operation in a manual operation mode of the device in the event of low battery or power failure. To improve safety, the device 21 may be provided with a locking mechanism such as a child-lock system that operates also when the device is being operated in a manual mode. FIG. 5.4 shows that a lens or other optical component of a capture means 11 is arranged over the pod (1). Figure 5.4 shows a typical field of view of the imaging device 11. This relative position of the pod 1 relative to a capture means improves the image capture which further facilitates an improved processing to assess contents. The driver may also be configured as an agitator or shaker mechanism that causes the drawer to vibrate as it opens and/or closes and prior to image capture. Shaking the drawer may assist in evenly distributing/levelling the pills within the containers, this may assist in providing more improved images for the purposes of counting of contents.

As the drawer 27 moves out of the device (21) it first reaches a first intermediary or partially open position. In this position the recesses 1a-1d of the first row are aligned with the capture means 11. Effectively each pod 1 of the first row is vertically aligned with a corresponding image capture means 11. As the drawer reaches this position, it stops temporarily, and the imaging device is triggered a capture of an image/images the pods aligned thereto and in the field of view. After the capture of images of the first row of containers, the drawer resumes its course of movement until it reaches a second intermediary or partially open position. In this position of the drawer, the recesses (seats) (2a, 2b, 2c, 2d) of the second row are aligned with the imaging device (11a, 11b, 11c, 11d). Each pod 1 in the second row of receivers is aligned with a corresponding imaging (11a, 11b, 11c, 11d). The pods 1 of the second row are now in the field of view of the imaging device. As the drawer (27) reaches the second intermediary position, it stops temporarily and the imaging device is triggered to a capture of images of each of the pods. After the capture of images of the second row of containers (e.g pods), the drawer resumes its course until it reaches a third intermediary or partially open position of the support. The same steps as previously described occur so that after the drawer had stopped images are captured of each container and the respective contents. After the drawer has stopped in its third intermediary position, movement is resumed until it fully opens so that the device is opened in the second open configuration.

Similar steps as above occur as the drawer returns into the housing of the device 21 so that the capture means (11a, 11b, 11c, 11d) captures images at the first, second and third intermediary/partially open positions as the drawer moves to return to the closed configuration. In the arrangement described the containers are provided in 3 rows and images are taken three times during opening and closing. If fewer or a greater number of rows were provided the number of imaging event would be adjusted accordingly.

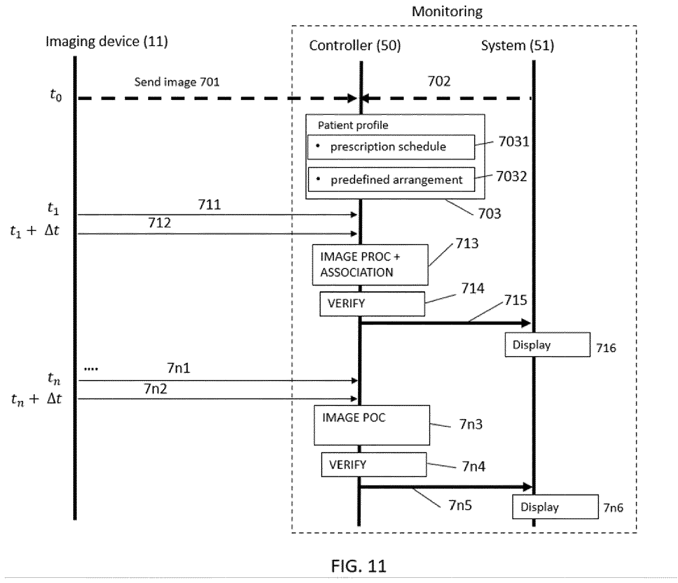

The drive means 153 or motor position be used by the device 21 or controller 50 to trigger the capture images of a row of containers at a particular partially opened configuration. Other suitable means for example a sensor may be provided to indicate when images are to be captured. The images captured of the pods and contents during a use event are subject to the steps of the method of FIG. 11 of managing and monitoring the medication of a patient. In a particular implementation of the method of capturing images of the containers (i.e pods) and their contents, all capture means (11a, 11b, 11c, 11d) take a picture simultaneously. Referring to the exemplary device (21) of FIGs 2, 4, 5, four images are taken at the same time. In a particular implementation of the method of capturing images of the containers (i.e pods) and their contents, each capture means (11a, 11b, 11c, 11d) is provided with a sensor to detect whether it is directly facing a container (also referred to as a pod). In the event that a capture means detects that it is not faced with a container, it may not take a picture to preserve resources powering the capture means. In this case, the system can derive that when a capture means does not capture an image, the corresponding recess opposite that capture means is not in use.

The drawer/support may be an insertable drawer/support or may comprise an insert that allows customisation to any configuration of receivers for containers 1 such as 4 by 4, 3 by 4, 3 by 3, 2 by 2 etc. The drawer could also allow different size containers to accommodate different size or quantity of medication depending on the size and frequency of the pills to be taken.

The device according to the present disclosure can be a stackable device which can be configured to include feet and indentations to allow a series of devices to be stacked one upon the other. Device 21 may be used or adapted for use in care homes and allow the management of medications for several patients on complex medication schedules. Likewise device 21 may be configured in home setting to manage two or more medication schedules for instance for a couple or as a family medication management system.

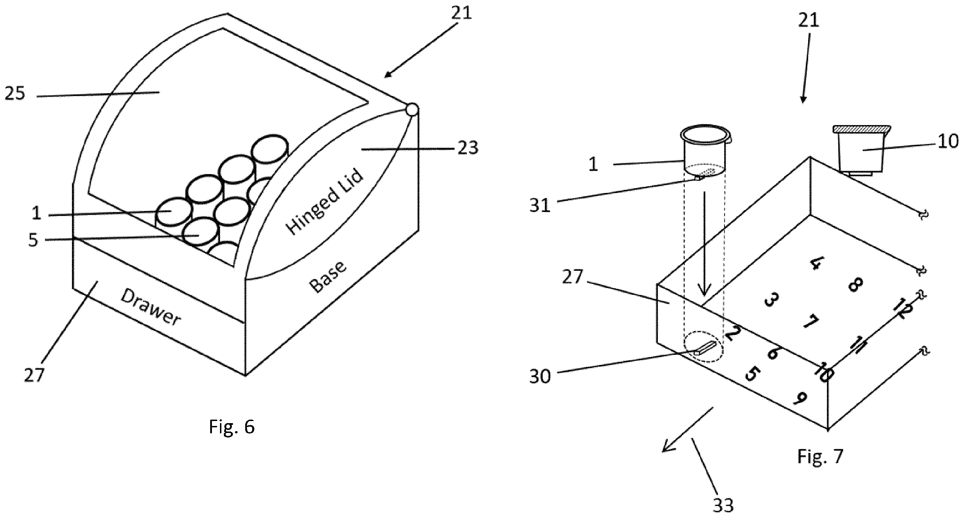

Referring to FIG.6, an exemplary device 21 in accordance with the present disclosure is represented in the form of a box having a lid 23. The device 21 of FIG. 6, is provided with an at least partially transparent upper face 25 to provide that the containers (1; 5) and their contents visible to a user when the device is closed. The lid 23 may be part of the upper face (25) of the device (21). A section of the lid may be clear or transparent to allow light penetration and to facilitate image capture of the at least one container.

Suitable imaging devices (11) include any device capable of capturing images in the form of photographs and/or video frames. The capture means is adapted to take pictures of the containers (1) and their contents at different times. The capture means may be arranged inside or outside the housing of the device to provide an appropriate image of the containers and their contents. In one example, the device may utilise a mobile phone camera to capture the images. The phone would sit into a docking cradle located on the upper section of the device. Such a system would position the mobile phone camera to accurately take an image of the pill container(s) and the contents. The application on the mobile phone would synchronise with the device hardware and software to trigger the image capture, timestamp, analyse and reconcile the container contents. Images could be captured as the drawer opens and closes through the various intermediary or fixed positions.

In examples illustrated in Figure 2, 5 and 6, the device (21) has a lid (23), which is hinged to the device. Such hinged lid is easy to operate, and it remains conveniently attached to the device (21) in either open or closed configuration. In the closed configuration (FIG 2, FIG 5.1), the lid is closed for protecting the containers (1-12). In the second open configuration (FIG 5.3), the lid is fully opened for allowing user access to the containers (1-12). The capture means (11) is preferably located on the lid (23) to take a picture of the containers as the lid opens. Having the camera system housed in an enclosed environment, where light is controlled allows capture and processing of more consistent images for analysis and verification.

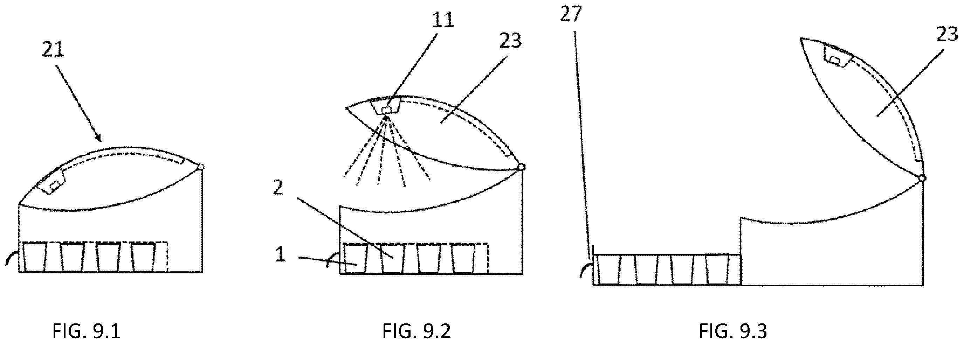

The device according to the present disclosure is configured to cause the capture means to take a picture of the container(s) after the device has opened and before it is in the second open configuration of FIG. 9.3. When the capture means has captured an image or series of images of the containers and their contents, it sends the image(s) to a controller (50) for assessing their contents. The controller (50) is associated with the device (21) as indicated above in relation to FIG. 1. The controller (50), which is communicatively coupled to the capture means (11) may be a processor such as a Central Processing Unit (CPU). Alternatively, the controller (50) may be part of the application (51) used to monitor and manage the medication. If the controller and the capture means are located on the same piece of electronic circuitry (on the same chip) (FIG. 1.2), they may communicate via a bus for example or any other local communication link. The controller and the capture means may be communicatively coupled by a short-range communication link such as Bluetooth or IEEE IPv6 Low PAN etc. When the controller (50) is remote from the device (21) as in FIG. 1.1, the capture means is equipped with a wireless technology such as WiFi, 4G, 5G etc. to send images to the controller (50). Data/images can be processed on a cloud.

In another example, an optical 3D laser scanning of the pills and container using a 64x64 scanning array (for example) could be used to determine medication volume. Such a scan could provide point cloud data to create a 3D model of the pills in the container. Combinations of image capture methods, 3D scanning, image/video capture would also improve counting capability.

Referring to FIG. 9, the device (21) includes various configurations including a closed configuration (FIG. 9.1), and a second open configuration (FIG. 9.3). An exemplary intermediary open configuration is illustrated in FIG. 9.2. Referring to the intermediary open configuration of FIG. 9.2 the device is not fully open for a user to retrieve or introduce a medicament. The intermediary open configuration of FIG. 9.2 is reached as the device (21) is being opened and before it reaches the second open configuration of FIG. 9.3. The skilled person would appreciate that an intermediary open configuration can be implemented in different ways depending on the type of opening allowing access to the device. Suitable openings include a door, a gap, a flap or a lid etc. These examples are not limiting, and a suitable opening may be integrated to the body of the device or it may be detachable therefrom. The device (21) is preferably configured to capture one or more images of the containers in the device when the device reaches the intermediary open configuration. The device (21) may be configured such that when it opens in the intermediary open configuration of FIG. 9.2, the capture means is triggered to take a picture of the containers. In the intermediary open configuration of FIG. 9.2, the lid (23) is partly opened. This position of the lid (23) advantageously deters a user from attempting to access the containers when the capture means (11) is about to take a picture. The device (21) can be configured such that in the intermediary open configuration a user is prevented from accessing the one or more containers.

In examples, the at least one container is transparent or semi-transparent so that the contents may be visible through the container wall. FIG. 9.2 shows that the capture means (11) may be at an angle in respect of the containers when the device (21) is in the intermediary open configuration. Depending on the optical angle of the capture means it may capture the contents of a container through the wall thereof. Thus, a container having a transparent or translucent wall is preferred to facilitate processing of the images captured.

In examples, a container is provided with a transparent cap or a translucent cap releasably secured to the container. Such a cap allows capture by the capture means of the contents of a container even when the cap covers it. The cap is preferably maintained attached to the container to protect the contents thereof and to prevent loss of the cap. The cap may be a press fit or screwcap to facilitate opening and closing the container. Other types of caps may be envisaged for releasably attaching a cap to a container.

In an example, the device (21) is configured to receive a given container at a dedicated location within the device. Several implementations are workable to allow different containers to be received at different locations. FIG. 7 is a perspective view of an exemplary device including two containers (1, 10) intended to be seated at different dedicated locations within the device (21).

According to a particular implementation, each container has a different raised portion (31) at its base, and the device (21) has for each container a corresponding depressed portion (30). Thus, a depressed portion (30) for receiving a given container (1) serves as a socket into which the raised portion (31) of the container can be fitted. Accordingly, each medicament container (1) can be securely seated at its dedicated location by engaging it in the corresponding socket (30). Each container fits exclusively in its corresponding socket in the manner of a jigsaw. The container can also be removed by disengaging the raised portion from the socket. The socket (30) is preferably at the base of the device (21) so that the containers are seated horizontally as shown in FIG. 7.

In an example, the raised portion at the base of the container is a three-dimensional character and the socket is a corresponding three-dimensional character. The containers (1, 10) of FIG. 7 comprise at their base a 3D numeral (31) and the base of the device (21) comprises corresponding depressed 3D numerals (30). Referring to FIG. 7, the exemplary device (21) comprises twelve sockets (30) to receive twelve different medicament containers (1-12). A given container (1) can thus only be inserted at its dedicated location corresponding to its 3D numeral (30). The 3D character may also consist of a letter or other form of character. Each raised portion functions as key and the corresponding depressed portion functions as a key aperture. The sockets of device (21) of FIG. 7 are arranged in a grid pattern having 3 columns and 4 rows. The abovementioned features facilitate insertion of containers at their dedicated locations in the device. They facilitate organising various medicament containers. These features are advantageous for elderly patients with trembling hands or neurological disorders as they assist them to place each medicament container at its dedicated location. These features provide an orderly way of storing medicaments which subsequently facilitate loading and retrieval of correct medicaments. It is critical to assist patients in storing medicaments in an ordered manner to prevent them from mistakenly taking incorrect medication or misidentifying or mixing up medication. The skilled person will appreciate that other structured arrangements are suitable to help a patient organize his/her medication in the device (21).

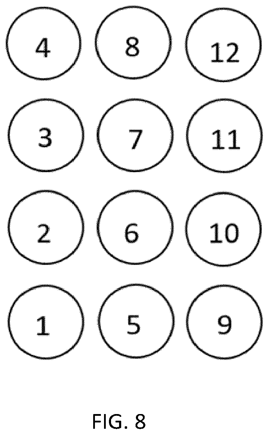

Referring to FIG. 8, there is provided an exemplary layout of containers within a device in which each socket has the form of a circular pad. Each socket may have a different colour and each container may have a corresponding different colour. This coloured layout helps organise different medicaments in different containers. It also aids the monitoring system in associating different medicaments with different coloured containers. This further facilitates the verification of whether a patient is using his/her medication as scheduled.

As indicated above, in an implementation, a container is provided with a mark to help the user identify the container. A numeral may be embossed on the cap of the container so that the patient can easily see the container number without turning it upside down avoiding any risk of spilling its contents. The skilled person would appreciate that examples of implementation include containers having a combination of raised portions and coloured walls. These features are desirable for elderly and/or visually impaired patients as they facilitate organising different medicament containers at different places within the device. Coloured containers are particularly more visible. Such organisation also facilitates the management and monitoring of the medication of a patient.

For this purpose, the at least one container is associated with a sensor to sense if the container is received at or removed from its dedicated location. Various types of sensors are suitable, and the sensor can be a magnetic or electrical contact for example. The sensor is communicatively coupled with the controller to signal when it detects that a given container is inserted at or removed from its dedicated location. The sensor can also help to detect if a container is misplaced within the device. Accordingly, the sensor allows monitoring of the times at which a given container is inserted or removed from its dedicated location in the device. This time could be the clock time of the processor for example. The skilled person will appreciate that such a sensor may be implemented in various ways. For instance, each container and/or each respective socket may be equipped with a sensor that signals to the controller if and when the container is not placed at its dedicated location. This information is made available to the system 51 via the device controller 50 to verify the arrangement of the medicament containers in the device. Referring to FIGs 1.1, and 1.2 the system (51) and related application 52 can be used to monitor the times at which a patient removes a medicament container accidentally or intentionally. Via the system 51, a remote operator can identify if one or more containers (1-12) are misplaced and are not sitting in their respective dedicated locations. In general, the sensor and the application (51) combined in the system can help monitor a patient medication adherence behaviour.

According to implementations, the device is prevented from closing when the sensor senses that at least one container is not positioned at its dedicated location. Advantageously, the sensor can be used to ensure that each container is correctly positioned within the container before the device is closed.

In various examples such as in FIGs 2, 3, 5 and 6, the part of the device that receives the containers is a drawer (27) that is pullable out of the device (21). Referring to FIG. 7, the arrow (33) shows a direction in which the drawer is to be extended or pulled out of the device (21). The drawer (27) has a base onto which the containers are positioned at their respective dedicated locations. Accordingly, as shown in FIG. 7 the base of the drawer comprises 3D sockets for receiving the 3D raised portions of the respective containers.

In various examples, the drawer (27) is prevented from closing unless each container is sitting at its dedicated location. This helps to ensure that the arrangement of the containers in the device matches a pre-configured arrangement.

In an implementation, the image capture is a video frame instead of a photographic image. Of course, the skilled person would appreciate that the invention works through the capture of a combination of video frames and photographic images.

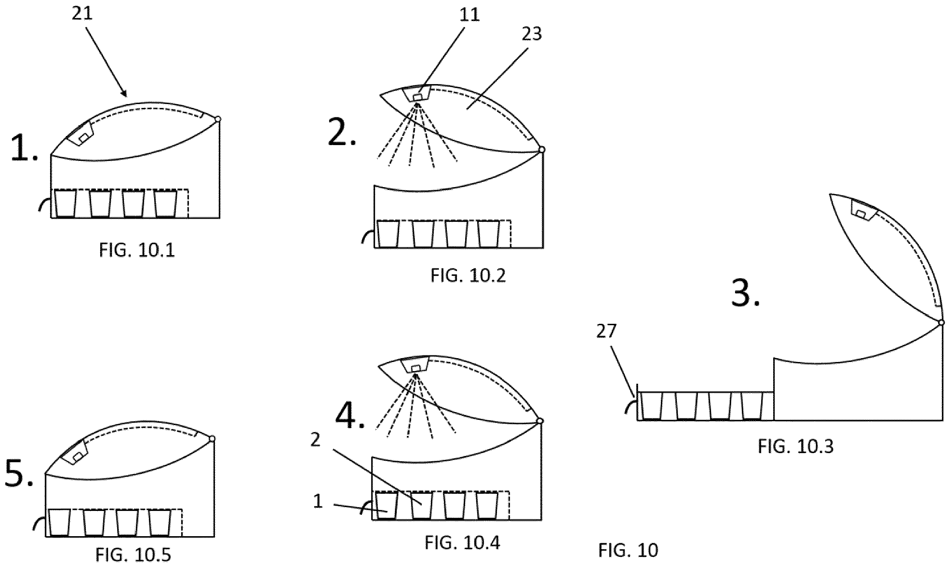

FIG. 10 shows various configurations of the device at five different times to illustrate a sequence of positions as a patient opens the device and then closes it. Any one of the five positions of FIG. 10 corresponds to a configuration presented with reference to FIG. 9.

The device (21) of FIGs 5 and 6 comprises a lid (21) and a drawer (27) as well as a capture means exemplary located on an internal portion of the lid (23). The skilled person would appreciate that the capture means may advantageously be located on the drawer (27). The positions of FIG. 10 include a closed configuration (FIG. 10.1 and FIG. 10.5) and three open configurations (FIGs. 10.2, 10.3 and 10.4).

At a first-time in FIG. 10, the device (21) is shown in the closed configuration whereby the lid (23) is closed so that the containers are inaccessible by a user. In the closed configuration, the device is fully closed such that the drawer (27) is not removable from within the housing of the device (21).

In an exemplary implementation, the device may be in a hibernation mode when in the closed configuration. The device may transition from the hibernation mode to an "Active Mode" when the user manually interacts with the device (21). For example, pushing a button on the device would power the device up from hibernation activating the capture means and possibly illuminating internal LED lights. The "Active Mode" can also be entered when a prompt is received through the user application indicating a time to take the medication. In an example, the device may be powered on or may enter its "Active Mode" when a proximity sensor provided on the device detects the nearby presence of a user. For example, an LED light or other indicator may indicate that it is time to take medication. The patient then approaches the device and waves his/her hand over the LED light or sensor for instance. This triggers opening of the drawer and an image capture sequence described earlier. Once the medication has been taken, and all the containers are returned to their dedicated positions, and the LEDs associated with the containers are extinguished, the patient may for instance hover his/her hand over the proximity sensor to initiate closing the device.

In effect the device further comprises a sensor for detecting a user input to control operation of the device, to open or close it. As an example, the user input includes (i) a user moving their hand or other object relative to the sensor including for example, waving their hand at the sensor to indicate that the device is to open; and (ii) a user maintaining their hand or other object in a relative still position relative to the sensor, or holding their hand steady over the sensor, to indicate that the device is to close.

At a second time in FIG. 10, the device (21) is shown in an intermediary open configuration whereby the lid has reached an intermediary open position after it has opened. In an example, the device is prevented from opening in the second open configuration of FIG. 10.3 unless the capture means captures at least one image of the containers and their contents. In an implementation, the lid (23) may be made to stop or to lock into place when it has reached the intermediary open position of FIG. 10.2. The position of the lid depicted in FIG. 10.2 activates the capture means (e.g internal camera). This position triggers the capture means to take a picture (possibly with timestamp) of the contents of each of the containers. In an implementation, the lid is momentarily stopped/locked in the intermediary open position of FIG. 10.2 for a duration of time during which the capture means takes at least one picture. The picture taken at this time provides an image of the containers and of their contents during the opening process prior to the lid being fully opened. After the image capture, the lid is unlocked to reach the second open configuration of FIG. 10.3 in which the container is accessible to retrieve/load medicaments. In an implementation, the lid remains locked in the intermediary open position for image capture until further user action on the lid.

At a third time in FIG. 10.3, the device (21) is opened in a second open configuration when the lid is fully opened. In an example, the drawer (27) is enabled to extend out of the device (21) in the second open configuration, when the lid is fully opened. In a particular example, the drawer (27) extends out automatically when the lid is fully opened. At the third time the drawer is shown in FIG. 10.3 in the extended position when the lid is fully opened. In an example of second open configuration, the user is enabled to access the containers when the drawer is positioned within the housing of the device. This feature eliminates the need to pull the drawer from the device to access the containers.

At a Fourth time in FIG. 10.4, the device (21) is opened again in the intermediary open position where the lid has reached the position of FIG. 9.2. In this intermediary open position, the lid locks into place and triggers the capture means to capture the image of the containers. As described above, in this intermediary open position, the lid may be momentarily stopped/locked or it may remained locked until further user action on the lid. The stopping/locking of the lid prevents the lid from moving during image capture and provides a stable image of the containers and of their contents at the time of the capture. Referring to the configurations of FIGs 10.2, 10.4 (FIG 9.2), in second and fourth times on FIG. 10 the drawer (27) is returned to the housing. The drawer is preferably prevented from being pulled out of the device (21) unless the capture means captures an image in the intermediary open configuration of FIG 10.4. This mechanism can be achieved by preventing the drawer (27) to be pulled out unless the device (21) has reached the second open configuration of FIG 10.3. In this example, the lid must be fully opened in the second open configuration for the drawer to be allowed to extend. In another implementation the drawer is allowed to extend when the device is in the intermediary configuration of FIGs. 9.2, 10.2 and the lid is not fully opened. The position at Fourth time of FIG. 10.4 illustrates for instance the configuration of the device (21) after an event of retrieval of medicament by the patient. The device preferably prevents movement of the lid when the drawer is at least partly pulled out of the housing. This ensures that the drawer is returned within the housing before the device reaches the intermediary open configuration (FIG. 10.4) so that an image captures all the containers.

The mechanism described in FIG. 10 provides an image of the containers and of their contents as the device opens before user access. The capture means advantageously takes an image before closure of the device. Accordingly, images taken during each opening and each subsequent closure can be correlated to derive a quantity of medicament retrieved by a user. This data can be used to monitor the use of medicaments by a patient over time and to assess compliance with a predefined prescription schedule. For instance, the controller (50) associated with the device (21) receives from the capture means (11) images captured at different times. Based on these images, the controller (50) assesses at least a quantity of medicament in the at least one container at the different times so as to manage and monitor the medication of the patient. The capture means (11) may timestamp each image at the time of its capture to facilitate the processing by the controller (50) of different images taken at different times.

At a Fifth time of FIG. 10 (FIG. 10.5), the device (21) is in the closed configuration where the lid (23) is fully closed.

The capture means (11) may send an image captured to the controller (50) at any time after its capture. The capture means may send an image to the controller just after the image capture while the device is in the intermediary open configuration of FIGs. 10.2 and 10.4. Alternatively, images captured while the device is opened may be sent to the controller when the device is in the closed configuration (FIGs.10.1, 10.5).

After a predetermined period of time in the closed configuration, the device may enter the hibernation mode to save power resources.

FIG. 11 illustrates steps of a method of managing and monitoring the medication of a patient according to an implementation of the present disclosure. FIG. 11 illustrates the controller (50) being communicatively coupled with the capture means (11) of the device (21). The application (51) is communicatively coupled with the controller (50). The application (51) may be user-friendly to conveniently monitor the patient medication use behavior and to ensure that the patient is taking his/her medication as prescribed. The application (51) would typically be made available to a carer or hospital staff member and/or the patient or customer care team.

A patient prescription schedule can be provided to the controller (50) via the application (51) through a configuration step such as step (702).

At step 703, the controller may also receive a pre-defined arrangement indicating a pre-defined position for each container in the device (21). For instance, the controller (50) may receive a layout such as that of FIG. 8 comprising a position of each container together with the medicament(s) contained therein. The patient prescription schedule (7031) and the pre-defined arrangement (7032) may be provided at step 703 by filling a patient profile through the application (51).

In an example, a configuration of the device (21) comprises a "Load Mode", in which the user is allowed to load the medication in different containers. The user application (51) can advantageously assist a user to assign the drugs to their corresponding containers. After the initial loading, the device (21) takes a picture of the loaded containers at time *t*₀ and sends it to the controller at step 701. The controller (50) receives through the image sent at step (701) an "pre-defined arrangement" (7032) of the patient's medicaments in the device (21). The pre-defined arrangement indicating a pre-defined position for each container, can be used against images taken overtime to monitor the current positions of the containers. The configuration of FIG. 11 is exemplary and other methods may be employed to provide the controller with the prescription schedule (7031) and pre-defined arrangement (7032).

The Table 1 below shows an exemplary pre-defined arrangement (7032) of containers as initially loaded with medicaments in the device. The first column represents an Identity (ID) of the container, which can be for instance a color, a number or a label that uniquely identifies the container in the device. The second column represents the position of each container in the device (21), which is the dedicated position described earlier. The third column describes the name or the type of medicament prescribed to the patient. The fourth column represents an initial quantity of medicament for each container. Referring to the layout of FIG. 8, a table of a pre-defined arrangement (7032) indicates that the Yellow, Green, and Red containers are located at respective positions 1, 2, 3.

The ID, position, medicament and initial quantity of Table 1 may have been recognized by the controller (50) from an image sent through configuration step 701. Alternatively, or in combination with step 701, at least some of these items may have been entered manually through the application at configuration step 702.

**Table 1: Pre-defined arrangement**

| **Container ID (e.g color Number/label)** | **Initial position of container in Box** | **medicament** | **Initial Quantity** |
|---|---|---|---|
| Yellow | 1 | Pills for chronic condition | Q1 |
| Green | 2 | Pill for heart condition | Q2 |
| Red | 3 | Tablet for lungs | Q3 |

As indicated above, the controller (50) may have received a pre-defined arrangement (7032), and a prescription schedule (7031) through configuration steps 701, 702. The following Table 2 illustrates an example of a prescription schedule (7031) gathering information of medical prescriptions for a patient.

**Table 2: prescription schedule**

| **medicaments** | **Time slots** | | **Quantity** |
|---|---|---|---|
| Pills for chronic condition | Day 1 | Morning | q₁ₘ |
| | | Afternoon | q₁ₐ |
| | | Evening | q₁ₑ |
| Pill for heart condition | Day 2 | Morning | q₂ₘ |
| | | Afternoon | q₂ₐ |
| | | Evening | q₂ₑ |
| Tablet for lungs | Day 3 | Morning | q₃ₘ |
| | | Afternoon | q₃ₐ |
| | | Evening | q₃ₑ |

Referring to FIG. 11 at step 711, the capture means (11) sends the image taken at time *t*₁ to the controller (50) for the controller to process the image.

At a later time *t*₁ + Δ*t*, when the patient closes the box device, the capture means takes a picture of the containers and their respective contents. This capture occurs for example when the device reaches again the intermediary open configuration (FIG. 9.2) before closure (FIG. 9.1).

At step 712, the capture means (11) sends the image taken at time *t*₁ + Δ*t*, to the controller (50) for processing the image.

At step 713, the controller (50) processes the images taken earlier to assess the contents of the containers at the respective times *t*₁ and *t*₁ + Δ*t*. At step 713, the controller associates each container with its identified contents at respective times *t*₁ and *t*₁ + Δ*t*. The processing of step 713 is intended to verify that the contents of the containers at a given time is in line with the expected contents as recommended by a prescription schedule.

At step 713, when processing an image taken at *t*₁ or at *t*₁ + Δ*t*, the controller (50) may identify a label of each container and associate its contents with the respective label. Labelling the containers such that the labels are captured on an image facilitates associating each container with its respective contents. This will facilitate assessing whether the contents of a device (21) at a given time is in accordance with a prescription schedule (7031). Alternatively, or in combination with the label, an exemplary method comprises identifying the color of each container in the image together with its respective contents. The controller (50) can easily associate at step 713 a color with the contents of the container having this color. This facilitates verifying at step 714 a captured arrangement against a predefined arrangement (7032) of coloured medicaments containers.

At step 713 the controller (50) can recognize in a given container at least a quantity of a medicament. At step 713 the controller may also determine based on the images captured a position of one or more containers in the device at each of times *t*₁ and *t*₁ + Δ*t*. At step 713 the controller may determine a medicament type and the quantity thereof in each container as well as an identity (e.g colour/number/label) of each container.

The controller may use for instance Artificial Intelligence or AI techniques and machine learning algorithms to interpret images and recognize contents at step 713.

The association of step 713 can be carried out for one or more containers after each image capture or after a number of image captures. The association results can be stored in a variety of data structures including but not limited to linked list and tables. The following table exemplary illustrates the association between a given container and its contents at different times *t*₁ and *t*₁ + Δ*t*. Of course, the skilled person would understand that a table of association may include all the containers and their respective contents at different times. For simplicity this is not represented in Table 3.

**Table 3: Container captured at different times**

| **Time of image capture** | **Container ID (e.g color Number/label)** | **Current position of container in Box** | **medicament** | **Current Quantity** |
|---|---|---|---|---|
| *t*₁ | Yellow | 1 | Pills for chronic condition | Q1' |
| *t*₁ + Δ*t* | Yellow | 1 | Pills for chronic condition | Q1" |

At step 713, the controller may also determine based on the images obtained at times *t*₁ and *t*₁ + Δ*t*, if a container received or dispensed a medicament as well as the quantity received or dispensed. For instance, referring to Table 3, the controller identified at step 713 that container *"yellow"* including "*Pills for chronic condition*" contains quantity Q1' at time *t*₁ and quantity Q1 " at time *t*₁ + Δ*t*. The controller (50) computes the difference between Q1" and Q1' to determine a quantity received at or retrieved from the container between the times *t*₁ and *t*₁ + Δ*t*.

At step 714, the controller can verify the position of each container based on the association established at step 713. For instance, the controller verifies that each container is located at a position indicated by the received pre-defined arrangement (7032). The controller may verify that the position of container *"yellow"* at time *t*₁ in Table 3 is identical to its initial position as defined in the pre-defined arrangement of Table 1. Instead of the ID (e.g colour/number/label) or in combination with the ID, the controller may use the recognized medicament type to perform the verification. For instance, via Table 3, the controller can verify that the "*Pills for chronic condition*" are located at position "1" in the box device as provided in the pre-defined arrangement of Table 1. The controller (50) can thus verify that an arrangement of all medicaments in the device (21) corresponds to a predefined arrangement (7032). This verification advantageously allows monitoring the position of a container over time. In particular, it allows identifying if a current position of a container is different from its initial position as provided in the configuration steps (701, 702). This method can help inform a carer about whether a patient has inadvertently misplaced a container to a position different than its dedicated position in the device.

At step 714, the controller also verifies that the quantity recognized in each container at times *t*₁ and *t*₁ + Δ*t* corresponds to a quantity expected by the prescription schedule. For instance, referring to Table 3, the controller identified at step 713 that container *"yellow"* including "*Pills for chronic condition*" contains quantity Q1' at time *t*₁ and quantity Q1" at time *t*₁ + Δ*t*. The controller then checks this information against the prescription schedule information provided by Table 2. For instance, the controller checks if the time *t*₁ + Δ*t* falls in any of the time slots of the prescription schedule such as *"Day 1 morning".* If yes, the controller (50) checks if current quantity of medicament Q1" at *t*₁ + Δ*t* less Q1' at *t*₁ in container *"yellow"* corresponds to q₁ₘ as prescribed by Table 2. If it is, this information will provide a level of confidence to a monitoring person that the patient has taken his/her medicine as scheduled. Otherwise, the monitoring person would be informed of the discrepancy between the actual container contents and the expected ones. Through step 714 the controller assesses whether the utilization of the medicament containers is compliant with a prescription schedule received at step 703.

Referring to FIG. 11, in an implementation, the controller (50) reports to the application (51) the results of the processing (713) and verification steps (714). The controller (50) may send a notification (715) to alert that the controller has verified an arrangement of at least one medicament container in the device. The notification message (715) can be a SMS message, email, SIP Notification or other form of message destinated to a patient and/or a carer.

The application (51) and the controller (50) may communicate via a network if they are separate or via an interface such as an API if they are co-located. The information sent from the controller to the application is intended to be used to manage and monitor the medication of the patient. The results of the processing step (713) and/or verification step (714) are displayed via the application at step (716) to visualize a patient medication use behavior. Accordingly, the information gathered from consecutive images captured can be displayed in various suitable forms through the application (51).

In various implementations, the controller (50) alerts the application (51) when it detects specific events. The controller (50) may send the application (51) a notification when the quantity of medicament dispensed at different times is non-compliant with the prescription schedule.

Referring to step (714) of Fig 7, the controller (50) may compute a difference between a quantity recognized in a container at time *t*₁ + Δ*t* and a quantity in the same container at time *t*₁. Thus, the controller derives the quantity of the medicament dispensed by the container and compares this quantity to the quantity expected to be consumed as set by the prescription schedule. If the quantity of medicament dispensed during interval [*t*₁ , *t*₁ + Δ*t*] differs from the quantity prescribed to be consumed in a slot covering this time interval the controller alerts the application. The controller may alert the application through a message such as a notification (715) presented above.

The alert or the notification (715) may include an instruction to refill a given container, when the quantity of medicament in that container falls below a pre-determined threshold. The pre-determined threshold is a parameter that is typically entered during a configuration step such as configuration step (702). Each medicament container may be associated with a different pre-determined threshold. Pharmacy collection and/or appointment reminders may also be provided through an alert implemented by the notification (715).

The steps described earlier can be repeated so that at later times *tₙ* and *tₙ* + Δ*t* when a user opens and closes the device (21) images are sent to the controller (steps 7n1 and 7n2). Subsequently, processing step (7n3) and verification step (7n4) similar to the earlier steps (713) and (714) are carried out. At step (7n5), the controller sends results to the application (51) for a user to monitor a patient medication adherence behavior through a Graphical Interface (7n6). Advantageously, the results of the processing, assessment and verification steps are available visually in near real time as a patient opens and closes the device. Making results available in this manner can advantageously inform a carer in near real time about when different medicaments are retrieved as a patient accesses the device (21). According to alternatives and arrangements envisaged. One or more of Image processing and data processing and control may be performed locally or remotely. It will be appreciated that while processing and data management described may have been in the specification as local or remote for the purposes of illustrating an exemplary arrangement - such processing and data analysis and other control can be implemented locally or remotely.

In various implementations, the controller 50 is configured to record successive images received over time. In an implementation, instead of processing each image as it obtains it, as shown in Figure 7, the controller can alter this processing to process a series of recorded images. In this implementation, the controller (50) carries out image processing and verification steps after a period of time or after a number of times the device (21) opened and closed. The controller can perform processing and verification steps once for a batch of recorded images. Over a long period of time, this implementation reduces significantly the number of processing and verification steps. However, each processing step and each verification step is computationally more expensive because each requires the processing of a greater number of images and data. In such an implementation, the results of the processing and verification steps are not available in near real time as a patient opens and closes the device (21). However, when the processing and verification steps are carried out, the application (51) is informed about whether the contents over a period of time follows a prescription schedule.

Local/on unit controller processing where the unit verifies and interprets the images will cut down on processing time significantly. Since images will not have to be uploaded to the cloud, on chip counting of pills directly takes place.

In an implementation, the controller (50) is part of the application (51) so that results of the image processing and verification steps are directly available to the application. This implementation provides the benefit of a real time availability of the results on an application graphical interface as they are being obtained by the controller.

The skilled person would appreciate that features of the device (21) presented in FIGs 2, 4, 5 can be combined with features of the device (21) presented in FIGs 6, 7, 9 and 10. For instance the lid (23) of device (21) of FIGs 9, 10 may be provided with a line of capture means as described with reference to FIGs 2, 4, 5. The pods described in FIG 3 may be used in the device of FIGs 6, 7, 9 and 10. The method steps of managing and monitoring medication of a patient presented in FIG. 11 is applicable to any device (21) presented above.

The systems and methods of the described examples may be implemented in a computer program product such as a physical, non-transitory computer readable medium having computer readable instructions. The medium may be provided in various forms, including one or more diskettes, compact disks, tapes, chips, magnetic and electronic storage media, volatile memory, non-volatile memory and the like. Non-transitory computer-readable media may include all computer-readable media, with the exception being a transitory, propagating signal. The term non-transitory is not intended to exclude computer readable media such as primary memory, volatile memory, RAM and so on, where the data stored thereon may only be temporarily stored. The computer useable instructions may also be in various forms, including compiled and uncompiled code.

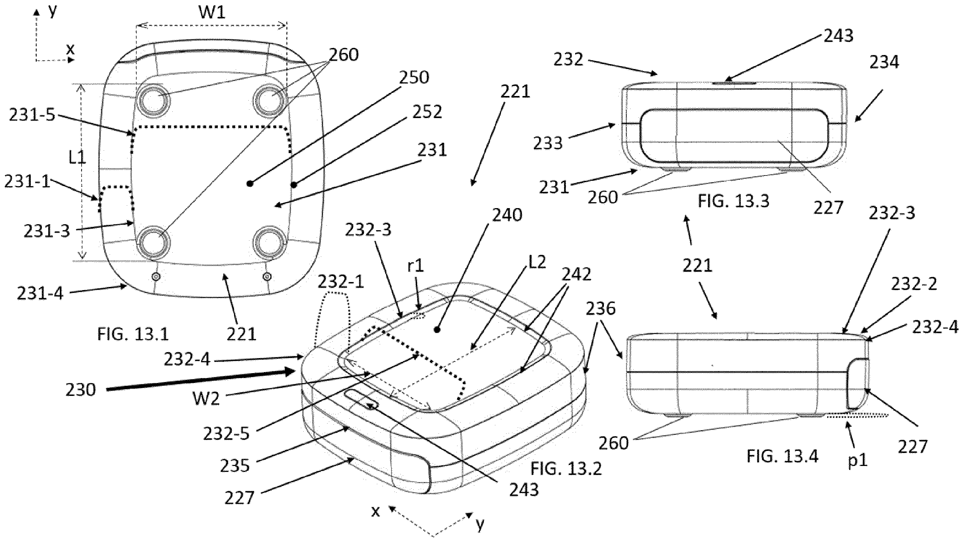

Referring to Figures 12 and 13 an alternative exemplary device 221 according to a further arrangement of the specification is described. The system 100 comprises a device 221. The device 221 is similar to device 21 and the same reference numbers have been used where appropriate. The device 221 or device 21 may be used in the systems and methods of the specification. The device 221 comprising an imaging device 11 and operation including for opening and closing and for assisting in management of medication and monitoring adherence is the same as described with reference to the device 21. The following description focuses on the features which are different to that of the device 21.

The housing 230 comprises a base 231, top 232, and side walls 233, 234, front-end wall 235 and back-end wall 236, which define an interior space for receiving and storing medication. The housing has a generally cuboid form. The front-end wall 235 comprises an opening 235'. The device 221 further comprises a movable support 123 coupled to the housing 230. The device 221 is configured to accommodate one or more medication containers 1 or 1' positionable within a housing 130 of the device. Containers 1' are described further below with reference to Figures 16.

The one or more containers 1 or 1' are removably positionable within the housing 230 of the device locatable on the support 123, each container being configured to store a medication, the medication typically provided in a loose form such as tablet or pill form. Typically, a patient would introduce his/ her various medications into one or more containers 1, 1' and store the containers in the device 121.

The support 123 comprises a plurality of recesses 124 each configured to accommodate a container. In the Figures an array 229 of nine receivers 124 for receiving nine containers 1/1' is provided. With reference to Figure 2.1 above it is noted that an array 29 of 12 receivers 124 was provided. It is appreciated that different forms of a support 123 each having a different form of array 29 or 129 of receivers may be provided. The support 123 may also be provided as an insert comprising the receivers and receivable in a drawer 27 or as part of a replaceable drawer.

Therefore, a device 21 or 221 could be modified or retrofitted with a different drawer or insert if the requirement for the number of different medications was to change.

Referring to Figures 13, and initially in particular Figure 13.2 the device 221 comprises an actuator and/or sensor 243 located on the top surface 232 and towards the front side 235 of the device 221. The top surface 232 comprises first and second portions including a first outer peripheral surface portion 232-1 and a central portion 232-5. The outer peripheral portion 232-1 comprises a sloping upwardly facing surface portion 232-2 that slopes downwardly from an inner peripheral edge 232-3 to an outer peripheral edge 232-4 of the first outer peripheral surface portion 232-1. The central portion 232-5 is recessed relative to the upper surface 232-2 of surrounding outer peripheral portion 232-1. Accordingly, the sensor and/or actuator 242 is located on an outwardly sloping portion 232-2 of the upper surface 232 of the device 221. Referring to Figure 13.2 and 13.3 is it illustrated that the actuator and/or sensor 243 thus located is oriented towards and accessible from the front of the device 221.

In effect the device further comprises a sensor for detecting a user input to control operation of the device, to open or close it. As an example, the user input includes (i) a user moving their hand or other object relative to the sensor 243 including for example, waving their hand at the sensor to indicate that the device is to open when the device is closed; and (ii) a user maintaining their hand or other object in a relative still position relative to the sensor, or holding their hand steady over the sensor, to indicate that the device is to close. Alternatively, the device may be closed from the open position, when the user waves their hand or another object relative to the sensor 243 to close the device when it is opened. In this latter case, the user waves their hand or other object relative to the sensor to open and close the device. In an exemplary arrangement of the specification, the user operates the device using a waving motion at an appropriate location and range of distance relative to the device. The location and range of distance is determined according to the device operation sensor configuration. It will be appreciated that alternative arrangements may be also be provided to effect control of operation of the device.

The central portion defines a recess 240. The upper surface 243 of the recess is recessed relative to the upper surface 232-2 of the outer-peripheral portion 232-1. A downwardly sloping wall 242 extends between the outer peripheral portion 232-1 and the recess 240. The wall 242 defining a peripheral wall 242 of the recess. The recess 240 is configured to allow for stacking of a second device 221 on top of a first device 221 to be located at an upper surface of the first device 221. The recess 240 has dimensions L2 X W2 in the Y and X directions respectively. The upper surface 232 of the housing 230 and the lower base 231 of the housing 230 comprise corresponding mating features for coupling of a first uppermost device 221 to a second lowermost device 221 in a stacked configuration. Referring to Figure 13.1 the lower surface or base 231 comprises an outer peripheral edge 231-4, an outer peripheral downwardly facing surface portion 231-1 and a central downwardly facing surface portion 231-5. The central lower surface portion 231-5 is recessed relative to the outer peripheral surface portion 231-1 defining a recess 250. The recess 250 is surrounded by a recess peripheral wall 252 and a plurality of contact feet 260 are located in the recess 250. The recess 250 has dimensions L1 X W1 in the Y and X directions respectively. The dimensions and locations of the recesses of the upper and lower surface may be configured for correspondence. The contact feet 260 are located on the base of the device 221 spaced apart from the lower external peripheral edge 231-4, and within the recess 250. The recess 250 is separated from the external peripheral edge walls of the device by the outer lower peripheral surface portion 231-1. Each device 221 is configured such that a lower facing recess 250 at the base of the first uppermost device and the upwardly facing recess 240 of the lowermost device may be located such that the lower surface and upper surface thereof are located facing each other to allow the contact feet 260 of the uppermost device to be located within the recess 240. The edge 242 of the recess 240 may be formed to assist in locating and retaining the contact feet 260 in the recess. The contact feet 260 may protrude downwardly relative to the lower surface 231 of the device a distance corresponding to the depth of the recess 260. In such an arrangement at least a portion of the first outer peripheral surface portion 232-1 of the lowermost device will contact a least a portion of the first outer peripheral surface 231-1 of the uppermost device. If the contact feet are accommodated fully in a corresponding recess 240, then the outer peripheral surface portions 232-1 and 231-1 may be in contact on all sides of the recesses 240 and 250. The arrangement provides for a compact and neat stacking and for accurate location of the separate devices in a stack and further for increased stability and security of the stack. A stack may be used for example if there are multiple device users in a home or hospital environment, to provide a space saving solution for a counter-top or other storage area while allowing for ease of management of the medication of multiple patients. The edge portion 252 of lower facing recess 250 may be formed to be received at the edge portion 242 of an upper facing recess 240 when stacking. The feet 260 may be configured to protrude a distance or extent p1 below the lower surface of the device, p1 corresponding to a depth r1 of the recess 240. As such the device 221 comprises a plurality of features that support stacking. Referring to Figures 14, further alternative exemplary arrangements of the specification are described. Figures 14 show different view of an alternative tray or drawer 227 according to the specification. The drawer 227 is configured to be movable between a first position when located in the housing and a second position when located outside the housing and accessible to a user. The drawer defines a moveable support 123 for the medication. The drawer 227 includes a plurality of receivers 1224 arranged in an array 1229. The array 1229 may be provided as an insert comprising the receivers 1224 for containers or pods 1, 1'. The insert may be a moulded insert that is configured to be removably insertable into the drawer. Clearly the form, arrangement and number of receivers may be varied as required. In the preferred arrangement of Figures 14 the drawer comprises an array 1229 of 9 receivers 1224. In this case, each receiver comprises a number is configured to receive a medication container 1, 1' and the receivers 1224 and the container 1, 1' each comprise a corresponding keying feature 1331, 1332 - in this exemplary arrangement each receiver comprises a number having recessed 3-dimensional relief form features and configured to receive therein a corresponding container having a corresponding number having a protruding relief form, that is configured to be received in the recess of the receiver. Clearly the specific form of the keying features may be varied. In use, in this exemplary arrangement a set of 9 containers 1, 1' each having a unique keying feature is provided for use with the array 1229 of 9 receivers 1124 each having a unique corresponding keying feature. The keying features assist a user in accurately locating a medication within the device and allows for accurate identification of the medication. As noted, the keying features can be varied for example to include braille features of any other suitable form as required. The device may be adapted to include in addition to keying features a voice or sound output to further assist a user in locating medications in one or more container 1, 1' in the correct corresponding receiver.

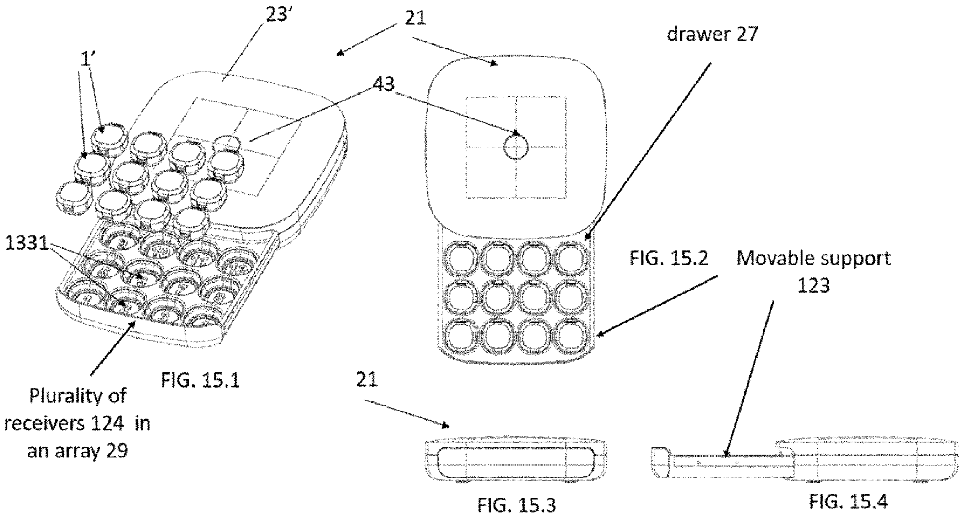

Referring to Figures 15 an alternative arrangement of an array 29 of twelve receivers in the drawer 29 of the device 21 is described. In this case each receiver 124 and container 1' comprises corresponding keying features. Here the receivers comprise numbers 1-12 formed as recessed relief keying features 1331, A corresponding set of twelve containers is provided each having a unique keying feature located on the base thereof.

Referring to Figures 16 an alternative arrangement of a medication container 1' also referred to as a medication pod 1' according to an exemplary arrangement is described. The container 1' is similar to the container 1 and the same reference numbers have been used where appropriate. Reference is made to the description provided above with reference to Figures 3.1 to 3.5 much of which applies to the container 1'. The main differences between the container 1' and container 1 relate to the lid and the configuration of the lid for three modes 1001, 1002, and 1003 of use.

FIGs. 16.1 - 16.6 show several views of an exemplary pod 1' as an example of a medication container according to the specification, including in a closed configuration or state 1001 and a medication retrieval configuration or state 1003. The pod 1' comprises a container body 1010 and a lid 1030. The container body 1010 comprises an external base portion 38', an internal base portion 38 and a side wall portion 39, in an arrangement similar to that of pod 1. The overall form of the exemplary pod 1' of the drawings is a rounded cuboid. The peripheral side wall 39 of the container body 1010 includes a generally vertical portion 39-1 and a tapered portion 39-2 that extend between the vertical portion and a pedestal portion 36 at the base 38, 38'. The internal space defined by the peripheral side wall 39 and the internal base portion 38 has a height H3 and width and length dimensions D3/D3' at the maximum spanning the internal width and length, as illustrated. In the exemplary arrangement the side wall 39 is curved and extends continuously defining the periphery of the container body. The side wall 39 has an upper peripheral edge surface 1039 defining an upper opening 1031 of the container body 1010.

Pod 1 has a hinged lid 1030. The lid 1030 of the pod 1' is hinged to side wall 39 of the pod 1' at hinge 1050 to the rear of the container. The hinge is located externally to the container body allowing movement of the lid through a full range of angles relative to the container body. The lid 1030 is dimensioned to fit the opening 1031 to achieve a sealed clamping engagement between a contact surface 1035 of the lid 1030 and the upper edge surface 1039 of the container body when closed. The lid 1030 is configured to have 3 main states defining ranges of position or movement in the overall full range of movement thereof relative to the opening and relative to the side walls. The lid 1030 is movable between a closed position 1001 when the lid 1030 is in closed engagement with the container body, and a fully opened position - at which the lid may be at an obtuse angle relative to opening. The angle of the lid relative to the opening would be limited by the arrangement of the hinge and stop feature to define the fully opened position.

The first state defined by the position of the lid 1030 relative to the opening 1031 is the closed state 1002.

The container and the lid 1030 may be configured to be operable in a released state 1002. In the released state the lid is movable freely relative to the opening 1031 about the hinge through a full range of angles including angles greater than for example 45, 60 or 90 degrees. In this released state 1002 all portions of the lid 1030 can be moved so as to be spaced apart from the side wall 39 and the opening 1031 to allow access to the internal portion of the container. The end of the range of movement of the released state is the fully opened position. The released state 1002 may for example be used to facilitate cleaning or loading of the container with medication. The released state 1002 may be selectable by a user for example by exerting a release force on a portion of the container or lid or other selection means.

The container 1' and the lid 1030 are configured to provide a further medication retrieval state 1003 which is essentially an intermediate state to facilitate ease of retrieval of the medication. In the retrieval state 1003, the lid can be opened and rotated through a limited range angles to a maximum opening angle α at which the front portion of the lid is spaced apart from the front portion of the peripheral wall 39 to define an opening O1. The opening O1 is sufficient to allow a user to pour out a tablet or pill - but provides a limited opening to assist in preventing a spill of the medication. The opening O1 allows for a controlled retrieval of medication from the container. The closed and the retrieval states 1001 and 1003 are provided as the normal states of the container and lid during a period of use and between refilling events. The container may comprise a stop or clamp to limit the range of movement of the lid relative to the opening in the medication retrieval state. As noted above the arrangement may allow for release of the stop to select the released state 1002 at intervals, as required.

To improve safety, the pods 1' may be provided with a locking mechanism 1040 such as a child-lock system. The locking mechanism 1040 comprises a lid lock component 1042 configured for mating in locking engagement with a container body lock feature 1041. A space 1043 may be provided between the lock components to allow access and release.

Referring to Figures 116.1 and 16.6, the lid 1030 comprises an upper lid portion 1032 and a lower lid portion 1033. In use a lower contact surface portion 1035 of the lid 1035 is brought into contact and engagement with the upper peripheral edge surface 1039 of the side wall 39 in the closed position 1001. The lid 1030 comprises a depending skirt 1036 or depending side wall 1036. The depending side wall is arranged depending from the upper lid portion defining a peripheral side wall 1036 comprising a front portion 1036-1 located at the front facing part of the lid and first and second side portion 1036-2 located at each of the sides of the lid. In the arrangement shown the depending skirt or depending side wall 1036 does not extend around the full peripheral extent of the lid but rather generally around 3 of the 4 sides. The side wall 1036 is not provided at the rearmost portion of the lid which is connected to the hinge. The depth of the depending side wall 1036 in the direction perpendicular to the upper surface of the lid is varied. The depth D1 at central front portion 1036-1 - which defines the opening O1 in the retrieval state 1003 is less than the depth D2 at the side portion 1036-2. The depending side wall 1036 is arranged spaced apart a distance s1 relative to an outermost peripheral edge 1034 of the lid and generally parallel to the outermost edge - following the form of the periphery of the lid. The lower contact surface 1035 of the lid is located between the outermost edge 1034 of the lid 1030 and the depending side wall 1036. The depending side wall 1036 is configured to be located internally in the container when the lid is closed. In the closed position the depending side wall 1036 is located in proximity to and generally parallel to an internal surface of the container side wall 39. The depending side wall comprises a lower edge 1037 and an upper edge 1038 located at an internally facing surface of the lid 1030. The lower edge 1037 has different portions 1037-1 at the front and 1037-2 at the sides each at a different separation D1 and D2 from the upper edge 1036 as illustrated.

Referring to Figure 16.6 the container 1' is shown open in the medication retrieval state 1003. The lid 1030 is rotated to an angle relative to the opening of the container such that the front portion 1036-1 of the depending side wall of the lid is spaced apart from the upper peripheral edge of the side wall 39 defining an opening O1. The opening is defined also by the form of the depending side wall 1036-1 at the front where the depending side wall 1036 has a depth D1. The depth D2 of the depending side wall is greater at the side portions 1036-2 and configured such that the depending side wall extends to the upper peripheral edge 1039 of the side wall 39 at the side portion of the container. Therefore, by virtue of the features and configuration of the container 1' a space is provided between the lid and side wall 39 of the container only at the opening O1 in the medication retrieval state 1003.

Other features of the pod 1' are provided as described with reference to Figures 3 above, for example the pod 1' is at least partially transparent. The material and body of the pods is selected taking account also of the optical properties and to facilitate or to improve image capture of the medicaments inside the pod, and further to improve the quality or properties of the images *I* to allow counting and/or identification of the contents. In some implementations only the lid 1030 is transparent. The pod 1' may for example have a diameter of the order of 60 millimetres and a suitable height for the device 21 or 221. The dimensions and form of the pod 1' are such that the medicaments especially pills can spread at the base of the pod 1 to facilitate counting based on an image capture. In the example arrangement of Figures 16 the internal base surface 38 of the pod on which the pills rest is arranged to include an angled and/or stepped portion. Pills distributed along a slanted surface may be easier to count. In an implementation the pod may also have a staggered bottom surface like a staircase to facilitate the stacking of pills. The internal base surface 38 of the pod may further be patterned or roughened, incorporate raised or recessed features to spread the pills or to provide increased friction between the pills and surface to facilitate counting them. A graduation such as a scale may be provided on an internal wall of the containers (pods) to facilitate determination of the quantity and counting of the pills. The scale may be arranged to extend partially or circumferentially around the interior to indicate levels within the container. Pod 1' may be provided with one or more markings to help the user identify the pod. For instance, a numeral may be embossed on the lid or a wall of the pod so that the patient can easily see the container number. Each container has an external base portion 38', and the external base portion may include a coding member or keying feature 1332 formed for mating with a corresponding coding member 1331 of a receiver provided within the housing for receiving a container

In the specification the terms drawer and movable support and tray have both being used essentially interchangeably. This reflects the overall arrangement in which a support used to support the containers 1, 1' is movable relative to the housing. The support or drawer of the claim may as described be driven though the range of movement by the drive means, for imaging and to provide access. As noted above in other arrangement for example based on selection of a mode of the device in the event of a power loss, the drawer may be moved manually.

The specification describes the devices 21 and 221 including the electronic component, communication components, imaging device for use in the overall system for management of medication. In an alternative the devices 21 and 221 as described may be provided together with keying features and together with a set of containers having keying features for use separately or independently off-line or stand-alone depending on user requirements.

Although numerous details are provided through the above examples, other examples may be practiced without these details. The description is not to be considered as limiting the scope of the disclosure.

## Claims

1. A medication storage and retrieval device (21) for managing and monitoring use of medication, the device (21, 221) comprising:
a housing (130, 230);
a movable support (123) coupled to the housing;
one or more containers (1, 1') removably positionable within the housing of the device locatable on the support, each container being configured to store a medication, the medication provided in a loose form such as tablets or pills;
the device (21, 221) having a first closed configuration when the movable support (123) and containers thereon (1), 21' are stowed within the housing, and a second open configuration when the movable support (123) and said containers (1, 1') thereon are located outside the housing for access by a user to allow retrieval of medication from a container, as required; and
the device comprising an imaging device (11) configured to capture one or more images of each container and its contents, being the medication contained therein at the time of capture of the image, the time of capture of each image being related to a device use event;
wherein the imaging device (11) is configured to capture a first image of each container and contents before it is made accessible to a user, and to capture a second image of each container and contents after it has been accessible to the user;
wherein the imaging device is configured to capture said images during the device use event at intervals of time as the movable support moves between the closed configuration and the open configuration and as it returns to the closed configuration;
wherein the images are processed to determine for each device use event one or more of: the identity of the type of medication contained in each container, the quantity of medication in the container before access and after access, the difference in the quantity of medication in the container before access and after access.

2. The device as claimed in claim 1, wherein the device use event relates to a time when the device operates to allow a user access to the one or more containers, wherein during a device use event the movable support is moved from the closed configuration to the open configuration and subsequently returned to the closed configuration.

3. The device as claimed in any one of claims 1 or 2, configured to provide information relating to the use of medication to the user, wherein the device comprises an information display (140) or information indicator (141) configured to indicate to the user one or more of: when medication is to be taken or the times of scheduled device use event; which medication is to be taken at a particular time or scheduled device use event.

4. The device as claimed in any preceding claim, wherein the device (21, 221) is coupled to device controller (50) configured to control operation of the device, including one more or more of the movable support, the imaging device, a time, and user event recordal device.

5. The device as claimed in any preceding claim, wherein the device (21, 221) is configured to receive a plurality of containers (1, 1'), the movable support (123) comprising a plurality of receivers (124, 1a-3d) each formed and configured to receive a container, wherein the receivers are arranged as an array (29) of rows and columns of receivers.

6. The device as claimed in any preceding claim, wherein the movable support (123) is coupled to a drive means operable to move the movable support between the closed configuration and the open configuration.

7. The device as claimed in claim 6, wherein the device controller (50) controls operation of the drive means for moving the movable support (123) and operation of the imaging device (11), wherein the controller (50) is operable in the course of a device use event to position each container at an image capture position relative to the imaging device, and wherein the controller is operable to control the imaging device to capture the image when the container is in position.

8. The device of any preceding claim, further comprising a sensor configured to detect a user input to control operation of the device, wherein the user input includes for example (i) a user waving their hand at the sensor to indicate that the device is to open from the closed position or to close from the opened position; or (ii) a user holding their hand steady over the sensor to indicate that the device is to close or that the device is to open.

9. The device as claimed in any preceding claim, wherein each container has an internal base portion (38) defining a floor of the container formed to provide a distribution of the medication therein such that the medication is distributed across a surface area of the base.

10. The device as claimed in claim 9, wherein the internal base portion (38) is arranged according to one or more of the following: wherein the internal base portion slopes from a central portion (central axis of the container) to the side wall portion of the container; wherein the internal base portion has a convex form; wherein the internal base portion comprises one or more annular steps.

11. The device as claimed in any preceding claim, wherein each container has an external base portion (38'), wherein the external base portion (38') comprises a coding member (1332) formed for mating with a corresponding coding (1331) member of a receiver (1a, 1224, 124) provided within the housing for receiving a container.

12. The device as claimed in any preceding claim, wherein the device comprises a sensor associated with at least one container and communicatively coupled with the controller; wherein when the sensor senses that the at least one container is received at or removed from the receiver corresponding to that container, the sensor sends a detection signal to the controller.

13. The device as claimed in any one of claims 3 to 12, wherein the information indicator (141) is arranged according to one or more of the following: wherein the information indicator (141) comprises a light indicator configured to illuminate to identify one or more containers to be used during a device use event; wherein the light indicator comprises a plurality of LEDs, each LED being associated with a respective container, wherein each LED illuminates to indicate that its associated container is to be removed from the device.

14. The device as claimed in any preceding claim, wherein each device (221) is configured for arrangement in a stacked configuration with a second device (221), wherein the actuator and/or sensor is located in proximity to a side wall of the device such that it is accessible in the event that the device is arranged in a stacking configuration, and wherein each device comprises corresponding upper and lower mating features to support arrangement in the stack configuration;
wherein a lower surface (231) of each device comprises a plurality of contact feet (260) for engagement with an upper surface of a corresponding device (221) for arrangement in the stacked configuration, and wherein an upper surface (232) of each device comprises a recessed portion (240), wherein the contact feet (260) of another device are locatable in the recess.

15. The device as claimed in claim 1 wherein the medication container (1') comprises a container body (1010) and a lid (1030) moveable about a hinge (1050) relative to the container body, and wherein the container is configured to have three states of use, including a first closed state (1001) at which the lid is engaged with the body of the container, a second medication retrieval state (1003) at which the lid is movable relative to the container to define an opening (O1) for controlled retrieval of a tablet or pill, and a third release state (1002), in the released state the lid is movable freely relative to the opening (1031); wherein in the released state (1002) all portions of the lid (1030) can be moved so as to be spaced apart from the container body (1010) to allow access to the internal portion of the container.
